# EUROPEAN PATENT APPLICATION

(11) **EP 4 484 033 A2**
(43) Date of publication of application: **01.01.2025**
(21) Application number: 24161053.4
(22) Date of filing: 04.03.2024
(51) Int. Cl.: B22F 1/052, B22F 10/14, B22F 10/73, B22F 10/85, B33Y 50/02, B22F 12/55, B22F 12/58, B33Y 40/10, B33Y 40/00, B22F 12/90, B33Y 10/00, B33Y 30/00, B22F 12/57

(54) **THREE-DIMENSIONAL OBJECT FABRICATION APPARATUS, THREE-DIMENSIONAL OBJECT FABRICATION METHOD, CONTROL DEVICE, AND RECOVERY DEVICE**

(30) Priority: 17.03.2023 JP 2023043479; 27.07.2023 JP 2023122685
(71) Applicant: Ricoh Company, Ltd., Tokyo 143-8555 (JP)
(72) Inventor: YOROZU, Yasuaki, Tokyo 143-8555 (JP); SUGIURA, Kenji, Tokyo 143-8555 (JP)
(74) Representative: SSM Sandmair

(57) **Abstract**

A three-dimensional object fabrication apparatus includes a fabrication unit that fabricates a fabricated object containing metal powder; a recovering unit that recovers at least a part of the powder as recovered powder; a powder mixer that generates mixed powder containing at least the recovered powder; and a controller that controls a mixing ratio of new powder of the powder and the recovered powder based on information on at least one state of the powder, the recovered powder, or the mixed powder.

## Description

### BACKGROUND OF THE INVENTION

### 1. Field of the Invention

The present invention relates to a three-dimensional object fabrication apparatus, a three-dimensional object fabrication method, a control device, and a recovery device.

### 2. Description of the related art

As the conventional three-dimensional object fabrication method by powder lamination (powder lamination fabrication method), a binder jet (BJ) method of applying a binding liquid (fabrication liquid) to a fabrication region on a surface of a powder layer, a high speed sintering (HSS) method of applying a fabrication solution containing a radiation energy absorbent, and the like are known.

In these methods, the powder of the powder layer other than the fabrication region is recovered and reused as recovered powder in some cases. The recovered powder to be reused may be affected in fabrication quality by the influence of, for example, a drying step under a high-temperature environment after the fabrication step.

For example, Patent Document 1 describes that a fluidity of a reused material powder (recycled material) is measured, and the particle size distribution of the material powder in an unused state before reusing (virgin material) is changed based on the measurement result, or silica particles are added to the virgin material to suppress a decrease in the fluidity of the recycled material (recovered powder).

### SUMMARY OF THE INVENTION

### [Problems to be Solved by the invention]

However, Patent Document 1 has room for improvement in terms of suppressing deterioration in quality of a fabricated object due to the use of recovered powder.

An object of the present invention is to improve fabrication quality in three-dimensional object fabrication using recovered powder.

### [Means for solving the problems]

In order to solve the above-described problem, according to an aspect of the present invention, there is provided a three-dimensional object fabrication apparatus including a fabrication unit that fabricates a fabricated object containing metal powder; a recovering unit that recovers at least a part of the powder as recovered powder; a powder mixer that generates mixed powder containing at least the recovered powder; and a controller that controls a mixing ratio of new powder of the powder and the recovered powder based on information on at least one state of the powder, the recovered powder, or the mixed powder.

### [Effects of the Invention]

According to the present invention, fabrication quality in three-dimensional object fabrication using recovered powder can be improved.

### BRIEF DESCRIPTION OF DRAWINGS

Other objects and further features of the present disclosure will be apparent from the following detailed description when read in conjunction with the accompanying drawings, in which:
FIG. 1 is a block diagram showing a schematic configuration of a three-dimensional object fabrication apparatus according to an embodiment of the present invention;
FIG. 2 is a diagram showing an example of a configuration of a fabrication unit according to the embodiment of the present invention;
FIG. 3 is a schematic view for explaining a fabrication process in the fabrication unit according to the embodiment of the present invention;
FIG. 4 is a schematic view showing a cross section of a fabrication tank according to the embodiment of the present invention;
FIG. 5 is a schematic view showing a cross section of a green body according to the embodiment of the present invention;
FIG. 6 is a view showing an example of a schematic configuration of a powder mixer according to the embodiment of the present invention;
FIG. 7 is a view showing a variation of the powder mixer according to the embodiment of the present invention;
FIG. 8 is a functional block diagram of a controller according to the embodiment of the present invention;
FIG. 9 is a diagram showing an example of a hardware configuration of the controller according to the embodiment of the present invention;
FIG. 10 is a flowchart of controlling fabrication of a three-dimensional fabricated object according to the embodiment of the present invention;
FIG. 11 is a flowchart of controlling adjusting a mixing ratio according to the embodiment of the present invention;
FIGS. 12A and 12B are diagrams for explaining an influence of a fabrication condition on a state of powder according to the embodiment of the present invention;
FIGS. 13A and 13B are examples of photographed images for fluidity estimation according to the embodiment of the present invention;
FIGS. 14A and 14B are examples of photographed images for filling density estimation according to the embodiment of the present invention;
FIGS. 15A and 15B are examples of photographed images for particle size distribution measurement according to the embodiment of the present invention;
FIG. 16 is a view showing a dependency between powder and a powder layer and a three-dimensional fabricated object according to the embodiment of the present invention;
FIG. 17 is a view showing a first variation of the fabrication unit according to the embodiment of the present invention;
FIG. 18 is a view showing a second variation of the fabrication unit according to the embodiment of the present invention; and
FIG. 19 is a block diagram showing a variation of a mixing ratio adjuster according to the embodiment of the present invention.

### DESCRIPTION OF PREFERRED EMBODIMENT

Hereinafter, embodiments will be described with reference to the drawings. In order to facilitate understanding of the description, the same reference numerals are assigned to the same components in the drawings as much as possible, and redundant description will be omitted.

In the following description, a layer of powder 50 formed in a fabrication unit 3 is referred to as a "powder layer 51". The powder layer 51 may be a flattened layer. The powder 50 contains metals, for example, aluminum and aluminum alloys, but may contain other metals. A layer formed by applying fabrication liquid 60 to the powder layer 51 is referred to as a "fabrication layer 61". The fabrication layer 61 is a layered fabricated object in which the powder 50 is bonded by applying the fabrication liquid 60. Each of the "powder layer 51" and the "fabrication layer 61" refers to a single layer. Further, an aggregate formed by laminating a plurality of fabrication layers 61 and in a state before the fabrication is completed is referred to as a "fabricated object". On the other hand, a product obtained by laminating the plurality of fabrication layers 61 to complete fabrication and sintering is referred to as a "three-dimensional fabricated object".

A term "mixed powder" used in the following description refers to a plurality of powders mixed by the powder mixer 2. The mixed powder includes new powder (hereinafter, referred to as "new powder") and recovered powder (hereinafter, referred to as "recovered powder"). The new powder is powder that has not been used for fabrication by the fabrication unit 3. The recovered powder is new powder used for fabrication in the fabrication unit 3. The recovered powder may be powder recovered from the fabrication unit 3, powder recovered from the powder remover 5, or a combination thereof. A "mixing ratio" indicates a ratio of the new powder and the recovered powder included in the mixed powder. As the "mixing ratio", any type of ratio such as a volume ratio or a weight ratio can be applied.

### <Basic Configuration of Three-dimensional object Fabrication Apparatus>

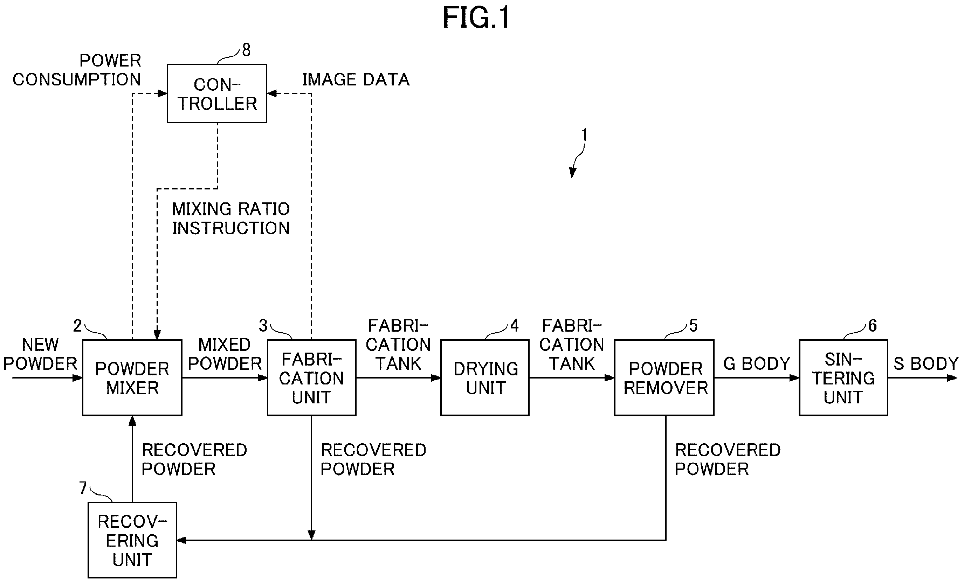

A basic configuration of a three-dimensional object fabrication apparatus 1 according to the embodiment will be described with reference to FIGS. 1 to 7.

FIG. 1 is a block diagram showing a schematic configuration of a three-dimensional object fabrication apparatus 1 according to the embodiment of the present invention. As the three-dimensional object fabrication apparatus 1 according to the embodiment of the present invention, a binder jet (BJ) method of applying a binder (fabrication liquid 60) to a fabrication region on a surface of the powder layer 51 will be described. In the BJ method, the fabrication liquid 60 is selectively applied to the powder layer 51, and the powder layer 51 is solidified and sintered, whereby a three-dimensional fabricated object having any shape can be fabricated. The fabrication liquid 60 includes, for example, a resin such as a binder and an ink such as a solvent.

The three-dimensional object fabrication apparatus 1 includes a powder mixer 2, a fabrication unit 3, a drying unit 4, a powder remover 5, a sintering unit 6, a recovering unit 7, and a controller 8.

The powder mixer 2 mixes the powder 50. As a result, a mixed powder is generated as the powder 50 to be supplied to the fabrication unit 3. The powder mixer 2 mixes new powder that has not been used for fabrication and powder that has been used for fabrication and recovered by the recovering unit 7. The powder mixer 2 can mix the mixed powder at a desired mixing ratio based on a control command from the controller 8 and supply the mixed powder to the fabrication unit 3.

The fabrication unit 3 fabricates a fabricated object containing the powder 50. The powder 50 includes at least mixed powder supplied from the powder mixer 2. In the present embodiment, the fabrication unit 3 performs fabrication by a BJ method. A part of the powder 50 used in the fabrication unit 3 is recovered as recovered powder by the recovering unit 7.

The drying unit 4 dries the fabricated object shaped by the fabrication unit 3. Specifically, the drying unit 4 dries solvent and the like contained in the fabrication liquid 60 contained in the fabricated object. In the drying unit 4, the fabrication tank 12 containing the fabricated object shaped in the fabrication unit 3 is heated and depressurized to be dried. As a result, the powder 50 is adhered by the binder contained in the fabrication liquid 60.

The powder remover 5 removes the excess powder 50 from the fabricated object dried by the drying unit 4. For example, any method such as the blowing out of air to blow off the excess powder 50 is used. The powder remover 5 removes the powder 50 that is not applied with the fabrication liquid 60 and is not adhered from the fabrication tank 12. Thus, a three-dimensional fabricated object in a state of being adhered by the binder, that is, a green body (G body) 62 is obtained in the powder remover 5. The powder 50 removed by the powder remover 5 is recovered as recovered powder by the recovering unit 7.

The sintering unit 6 sinters the green body 62 to ultimately produce a three-dimensional fabricated object (S-body). The sintering unit 6 is sintered after removing the binder from the green body 62 (degreasing), for example, in a sintering furnace.

The recovering unit 7 recovers at least a part of the powder 50 of the fabrication unit 3 as recovered powder. The recovering unit 7 recovers the powder 50 from the powder remover 5. The recovering unit 7 supplies the recovered powder to the powder mixer 2.

The controller 8 controls the operation of each unit of the three-dimensional object fabrication apparatus 1. In particular, in the present embodiment, the controller 8 performs a mixing ratio adjustment control for controlling the mixing ratio of the powder mixed in the powder mixer 2 based on at least one of the information on the state of the powder 50 or the information on the fabrication condition of the fabrication unit 3. The controller 8 outputs a command value (mixing ratio instruction) including information on the mixing ratio to the powder mixer 2. The information on the state of the powder 50 is, for example, information on at least one state of new powder, recovered powder, or mixed powder. The information on the state of the powder 50 may include one or more of the fluidity of the powder, the filling density of the powder, the particle size distribution of the powder, and the driving force of the motor, or may be a combination thereof. The fabrication condition may include one or more of the volume of the fabricated object, the scanning rate of a flattening unit, the speed of rotation of the flattening unit, and the laminate thickness of the powder layer, or may be a combination thereof. Further, these pieces of information may be determined from an image or may be measured by an existing measuring device.

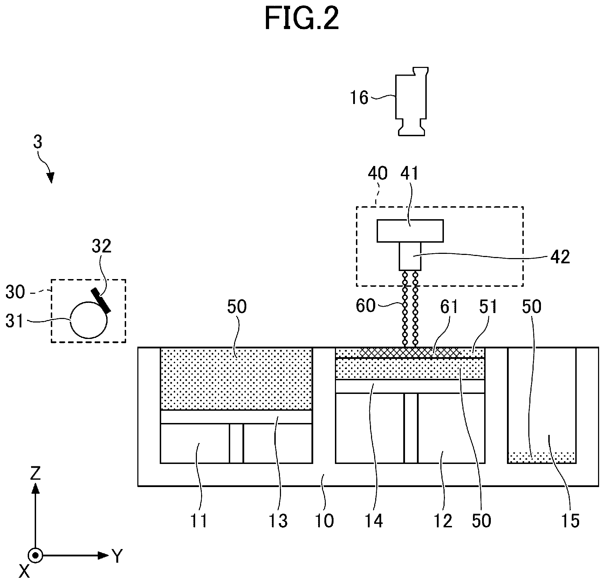

An example of the operation of the fabrication unit 3 of the BJ method will be described with reference to FIG. 2. FIG. 2 is a diagram illustrating an example of a configuration of the fabrication unit 3 according to the embodiment of the present invention.

In the following description, the X direction, the Y direction, and the Z direction are directions perpendicular to each other. The X direction and the Y direction are horizontal directions, and the Z direction is a vertical direction. The X direction is the axial direction of the rotation axis of the flattening unit 31. The Y direction is a moving direction of the flattening unit 31 and is an arrangement direction of the supply tank 11, the fabrication tank 12, and the excess powder tank 15 in the powder tank 10. The Z direction is a direction in which the supply stage 13 and the fabrication stage 14 are raised and lowered. In the following description, for convenience of description, the Z positive direction side may be referred to as an upper side, and the Z negative direction side may be referred to as a lower side.

As shown in FIG. 2, the fabrication unit 3 includes a powder tank 10, a laminating unit 30, and an applying unit 40.

The powder tank 10 forms a powder layer 51 containing the powder 50. The applying unit 40 applies the fabrication liquid 60 to the powder layer 51 to form the fabrication layer 61. In the fabrication unit 3, a plurality of fabrication layers 61 are stacked to shape the fabricated object.

The powder tank 10 includes the supply tank 11, the fabrication tank 12, the supply stage 13, the fabrication stage 14, and the excess powder tank 15. The powder tank 10 has a box shape. Three upper surfaces of the supply tank 11, the fabrication tank 12, and the excess powder tank 15 are open to the outside.

The supply tank 11 of the powder tank 10 is a tank that supplies the powder 50 to the fabrication tank 12. The supply tank 11 holds the powder 50 to be supplied to the fabrication tank 12. A supply stage 13 is provided at the bottom of the supply tank 11. The supply stage 13 is moved up and down in the vertical direction (Z direction). The side surface of the supply stage 13 is disposed so as to be in contact with the inner side surface of the supply tank 11.

The powder 50 required for fabrication is supplied from the supply tank 11 to the fabrication tank 12 of the powder tank 10. The powder layer 51 and the fabrication layer 61 are formed in the fabrication tank 12. Further, in the fabrication tank 12, a plurality of fabrication layers 61 are stacked to shape the fabricated object.

A supply stage 13 and a fabrication stage 14 are provided at the bottom of the supply tank 11 and the bottom of the fabrication tank 12, respectively, and are moved up and down in the vertical direction (Z direction). The side surface of the fabrication stage 14 is arranged so as to be in contact with the inner side surface of the fabrication tank 12. The upper surfaces of the supply stage 13 and the fabrication stage 14 are maintained horizontally.

The excess powder tank 15 of the powder tank 10 is a tank for holding the powder 50 that becomes excess among the powder 50 flattened by the flattening unit 31 when forming the powder layer 51. A means for sucking the powder 50 may be provided at the bottom of the excess powder tank 15, or the excess powder tank 15 may be a removable means. The excess powder tank 15 is disposed next to the fabrication tank 12. The excess powder 50 held in the excess powder tank 15 is recovered by the recovering unit 7 by applying any of the above-described methods, and is resupplied as recovered powder from the recovering unit 7 to the powder mixer 2.

The powder 50 held in the supply tank 11 is appropriately replenished by the powder mixer 2 supplying the mixed powder at any timing, for example, before the start of fabrication by the fabrication unit 3 or when the amount of the powder 50 in the supply tank 11 decreases. Although the powder tank 10 includes the supply tank 11 and the fabrication tank 12 in the above embodiment, the powder 50 may be directly supplied from the powder mixer 2 to the fabrication tank 12 without providing the supply tank 11.

As a method of conveying the powder 50 from the powder mixer 2 to the supply tank 11, a screw conveyor method using a screw, a pneumatic transportation method using air, or the like is used.

In the example of FIG. 2, the powder tank 10 is configured such that the internal space of a single box is divided into three spaces along the Y direction to form the supply tank 11, the fabrication tank 12, and the excess powder tank 15. However, the configuration of the powder tank 10 is not limited to the example of FIG. 2. For example, the supply tank 11, the fabrication tank 12, and the excess powder tank 15 may be formed by separate boxes. In this configuration, it is preferable that the surfaces of the supply tank 11 and the fabrication tank 12 facing each other in the Y direction and the surfaces of the fabrication tank 12 and the excess powder tank 15 facing each other in the Y direction are disposed in close contact with each other. According to this configuration the powder 50 can be prevented from leaking to the outside when the powder 50 is moved between the tanks, and the powder 50 can be moved more reliably. As described with reference to FIG. 1, the fabrication tank 12 containing the fabricated object by the fabrication unit 3 can be easily conveyed to the drying unit 4 and the powder remover 5.

The laminating unit 30 includes a flattening unit 31 and a powder remover 32.

The flattening unit 31 of the laminating unit 30 flattens the fabrication layer 61 and the powder layer 51. The flattening unit 31 flattens the fabrication layer 61 and the powder layer 51 by scanning a recoater as a rotating body along the surface of the powder 50 while rotating the recoater. The flattening unit 31 is rotationally driven, and thus the powder 50 on the supply stage 13 of the supply tank 11 is supplied to the fabrication tank 12 to form the powder layer 51. The flattening unit 31 reciprocates in the Y direction along the stage surface (the surface on which the powder 50 is loaded) of the fabrication stage 14. More specifically, the flattening unit 31 moves horizontally from the outside of the supply tank 11 so as to pass above the supply tank 11 and the fabrication tank 12. Thus, the powder 50 is transferred and supplied onto the fabrication tank 12, and the flattening unit 31 flattens the powder 50 while passing over the fabrication tank 12, thereby forming the powder layer 51. The flattening unit 31 is a member longer than the inner dimensions of the fabrication tank 12 and the supply tank 11. The flattening unit 31 may be a blade or a bar as a plate-like member.

The powder remover 32 of the laminating unit 30 removes the powder adhering to the flattening unit 31. The powder remover 32 moves together with the flattening unit 31 while being in contact with the peripheral surface of the flattening unit 31.

The applying unit 40 includes a carriage 41 and a head 42.

The head 42 applies the fabrication liquid 60 to the powder layer 51. The head 42 is, for example, an inkjet head, and a nozzle row in which a plurality of nozzles are arranged is disposed in the head 42. A color fabricated object may be formed by applying a cyan fabrication liquid, a magenta fabrication liquid, a yellow fabrication liquid, and a black fabrication liquid, or a fabrication liquid of one color may be applied from each of a plurality of nozzles. The fabrication liquid 60 may be applied by an inkjet method or a dispenser method.

At least one head 42 is mounted on the carriage 41, and is reciprocated in X (main scanning), Y (sub-scanning), and Z directions by a motor, a guide member, and the like.

In particular, in the present embodiment, the fabrication unit 3 includes a photographing unit 16. The photographing unit 16 photographs the surface of the powder. The photographing unit 16 is installed, for example, above the fabrication tank 12 so that the entire upper opening part of the fabrication tank 12 is included in the angle of view. The position of the photographing unit 16 is not particularly limited as long as the photographing unit 16 is located at a predetermined position inside the fabrication unit 3 where the surface of the powder 50 can be photographed. The photographing unit 16 may be installed outside the fabrication unit 3 to photograph an image of the state of the powder 50. The photographing unit 16 is controlled by the controller 8 to photograph images of the surfaces of the powder 50 on the fabrication tank 12 when various tests are performed, and outputs visual information of the photographed images to the controller 8. As the photographing unit 16, for example, a digital camera, a video camera, a charge coupled device (CCD), or a complementary metal oxide semiconductor (CMOS) camera is used. The photographing unit 16 may be a stereo camera that photographs images of the measurement target object in overlapping photographing regions from different photographing positions. The number of photographing units is not limited, and a plurality of photographing units may be provided. The photographing unit 16 may be a three-dimensional measurement device that measures a point cloud of the surfaces of the powder 50 from the photographed visual information.

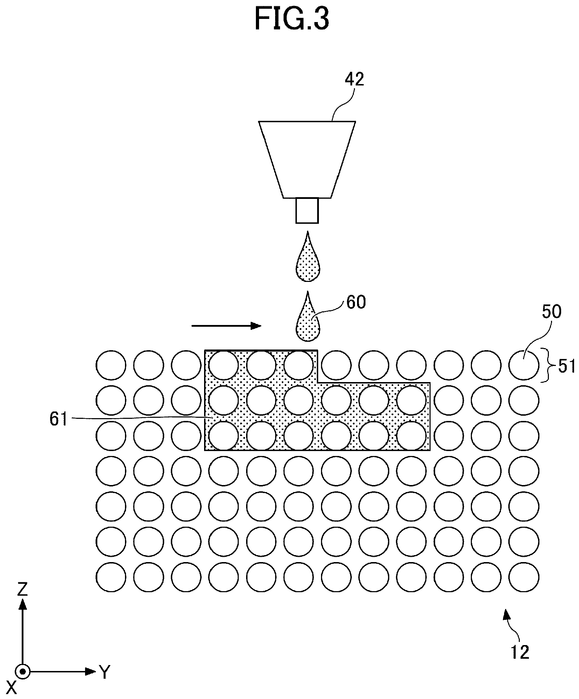

FIG. 3 is a schematic view for explaining a fabrication process in the fabrication unit 3 according to the embodiment of the present invention. The operation of the fabrication unit 3 will be described with reference to FIG. 3.

The fabrication unit 3 starts fabrication in a state where the supply tank 11 is filled with the powder 50. The bottom surface (supply stage 13) of the supply tank 11 is raised, and the bottom surface (fabrication stage 14) of the fabrication tank 12 is lowered. The powder 50 overflows onto the supply tank 11 by the amount of the rise of the bottom surface of the supply tank 11. The flattening unit 31 is scanned from the supply tank 11 onto the fabrication tank 12 while being rotated. As a result, the powder 50 that has overflowed from the supply tank 11 is conveyed to the fabrication tank 12 and moves into the fabrication tank 12. The powder 50 is dispersed in the fabrication tank 12 by the amount of the lowering of the bottom surface of the fabrication tank 12, and the excess powder 50 overflows. Next, the flattening unit 31 is scanned from the fabrication tank 12 to the excess powder tank 15. The powder 50 that has overflowed from the fabrication tank 12 is thereby charged into the excess powder tank 15. The powder 50 in the excess powder tank 15 is recovered by the recovering unit 7 .

Thereafter, as shown in FIG. 3, the inkjet head 42 of the applying unit 40 is scanned over the fabrication tank 12. Thus, the fabrication liquid 60 is applied to the uppermost powder layer 51 of the powder 50 in the fabrication tank 12 in any image pattern. As a result, a fabrication layer 61 in which the fabrication liquid 60 has permeated into the powder 50 is formed in the powder layer 51. The above-described operation is an operation to form a single layer, and is repeated many times. Finally, the fabrication tank 12 is filled with the powder 50, and a region (a plurality of laminated fabrication layers 61) to which the fabrication liquid 60 is selectively applied is present inside the fabrication tank 12.

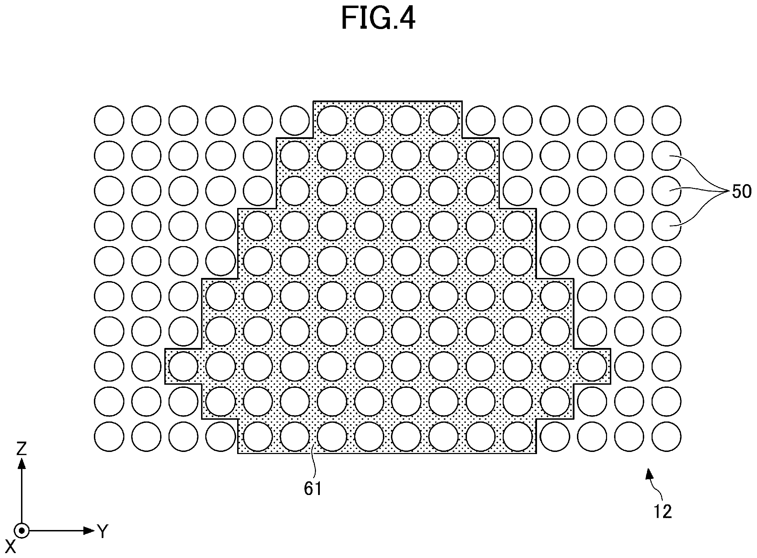

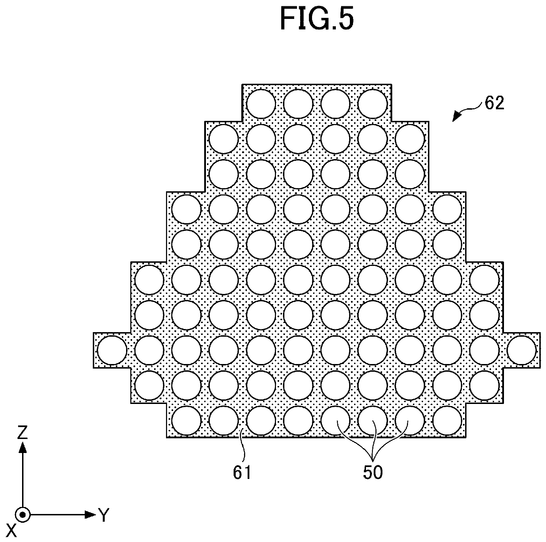

FIG. 4 is a schematic view showing a cross section of the fabrication tank 12 according to the embodiment of the present disclosure. FIG. 5 is a schematic view showing a cross section of a green body 62 according to the embodiment of the present invention. The processes from the drying unit 4 to the powder remover 5 will be described with reference to FIGS. 4 and 5.

FIG. 4 shows a cross section of the fabrication tank 12 after fabrication in the fabrication unit 3. The interior of the fabrication tank 12 is filled with the powder 50, and includes a region (fabrication layer 61) to which the fabrication liquid 60 is applied and a region to which the fabrication liquid 60 is not applied. Immediately after the fabrication liquid 60 is applied, the fabrication liquid 60 is just infiltrated between the particles of the powder 50 and is not adhered. The fabrication tank 12 is then placed in the drying unit 4 and dried. The liquid component of the fabrication liquid 60 evaporates, and only the binder component contained in the fabrication liquid 60 remains behind, so that the particles of the powder 50 are adhered to each other.

The powder remover 5 removes the powder 50 from the fabrication layer 61 in the region where the fabrication liquid 60 is not applied and is not adhered. The powder 50 removed by the powder remover 5 is recovered by the recovering unit 7. FIG. 5 shows a cross section of the fabricated object (green body 62) remaining after the powder 50 around the fabrication layer 61 is removed from the fabrication tank 12 and recovered.

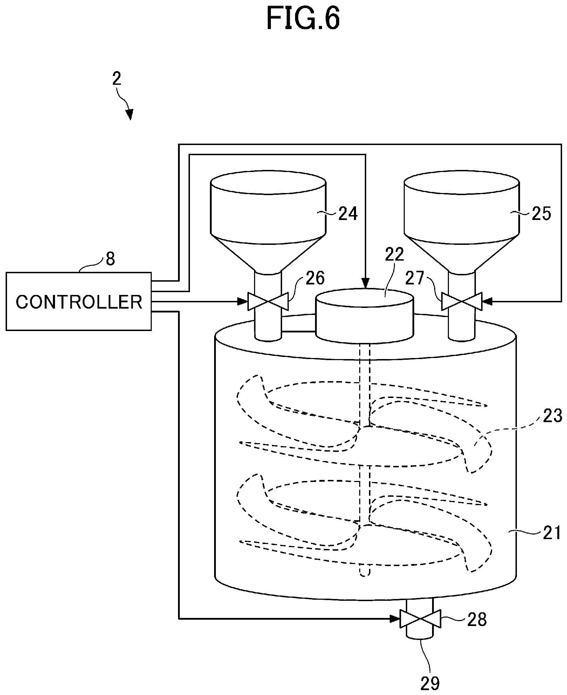

The powder mixer 2 will be described with reference to FIG. 6. FIG. 6 is a view showing an example of a schematic configuration of the powder mixer 2 according to the embodiment of the present invention.

As shown in FIG. 6, the powder mixer 2 includes a stirring tank 21, a motor 22, a screw 23, tanks 24 and 25, a recovered powder tank 25, valves 26, 27, and 28, and a mixed powder outlet 29.

The stirring tank 21 is a tank that holds and stirs the powder 50. The motor 22 drives the screw 23. The screw 23 is installed in the stirring tank 21 and is rotated at a predetermined rotational speed by driving the motor 22.

Therefore, the stirring tank 21 stirs and uniformly mixes the powder by rotating the screw 23 by the motor 22. With respect to the command value of the speed of rotation of the screw 23 from the controller 8, the driving force of the motor 22 required for the speed of rotation may vary depending on the amount of the mixed powder held in the stirring tank 21, the mixing ratio of the new powder and the mixed powder, and the like. Therefore, for example, information on the power consumption of the motor 22 required for rotating the screw 23 at a predetermined rotational speed is transmitted to the controller 8. Then, the controller 8 estimates the driving force of the motor 22 based on the information of the power consumption. The controller 8 determines information on the state of the powder based on the estimated driving force of the motor 22.

The new powder tank 24 holds new powder. The recovered powder is held in the recovered powder tank 25. The two tanks, i.e., the new powder tank 24 and the recovered powder tank 25 are connected to the stirring tank 21 via the valves 26 and 27, respectively. Thus, the powder can be supplied from the tanks 24 and 25 to the stirring tank 21.

The valves 26 and 27 are opened and closed by commands from the controller 8. Thus, the powder mixer 2 can adjust the mixing ratio of the mixed powder.

The new powder tank 24 and the recovered powder tank 25 have a weight measuring function. For example, the weights of the powder charged into the stirring tank 21, the ratio of the weights of the new powder and the recovered powder, and the like are determined from the difference between the measured weights before and after the powder is supplied to the stirring tank 21. The method of measuring the amount of new powder and recovered powder charged into the stirring tank 21 may be based on information other than weight, such as volume.

From the mixed powder outlet 29 the mixed powder can be taken out via the valve 28 at the lower part of the stirring tank 21. The valve 28 is opened and closed by a command from the controller 8, and thus it is possible to adjust the amount of mixed powder supplied from the powder mixer 2 to the fabrication unit 3.

Here, a supplementary explanation will be given on a problem in reusing the recovered powder. When the powder 50 is used in the fabrication, the state of the powder 50 changes. For example, the powder 50 recovered from the fabrication tank 12 of the fabrication unit 3 may have a trace amount of the fabrication liquid 60 attached thereto, or may be oxidized by being exposed to air during fabrication, and thus the state of the powder 50 changes. The powder 50 exposed to high temperature in the drying unit 4 has the particle surface modified and the state of the powder 50 is changed. Due to these changes, the recovered powder recovered from the fabrication unit 3 and the powder remover 5 is different in state from new powder. Therefore, even when the recovered powder is reused, it is necessary to improve the fabrication quality.

Therefore, it is effective that the controller 8 controls the mixing ratio of the new powder and the recovered powder so that the mixed powder to be supplied to the fabrication unit 3 has desired characteristics based on at least one of the information on the fabrication condition of the fabrication unit 3 or the information on the state of the powder 50.

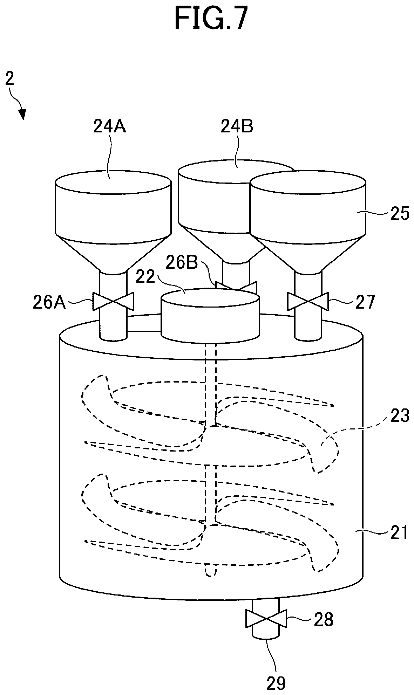

FIG. 7 is a view showing a powder mixer 2 according to a variation of the embodiment of the present invention. As shown in FIG. 7, the powder mixer 2 may be configured to stir a plurality of types of new powder together with recovered powder to generate mixed powder.

The powder mixer 2 of FIG. 7 has a first new powder tank 24A and a second new powder tank 24B in which two types of new powder are respectively accumulated, in addition to the recovered powder tank 25 of FIG. 6. The first new powder tank 24A and the second new powder tank 24B are connected to the stirring tank 21 via a valve 26A and a valve 26B, respectively. The opening and closing of the respective valves 26A, 26B, and 27 are adjusted by a command from the controller 8. Thus, three kinds of powder including two kinds of new powder and recovered powder can be supplied to the stirring tank 21 at a desired mixing ratio and mixed.

Here, the two types of new powder are two types of powder having different characteristics. For example, two kinds of powders, that is, a powder subjected to a predetermined pretreatment and a powder not subjected to the pretreatment, two kinds of powders having different particle diameters, or a combination thereof may be used. In the example of FIG. 7, a configuration in which the new powder is increased to two types is illustrated, but a configuration in which three or more types of new powder are mixed with the recovered powder may be employed.

In this way, the powder mixer 2 mixes two or more types of new powder that has not been used in the fabrication unit 3 with the recovered powder. The controller 8 controls the mixing ratio of each of the two or more types of new powder and the recovered powder. This improves the fabrication quality. For example, when powders having different particle diameters are mixed, the density can be easily increased as compared with the case of the new powder having one kind of powder diameter. This is because particles having a small diameter can enter gaps between particles having a large diameter. When the density can be increased, the possibility of forming a fabricated object having high strength increases.

A problem in fabrication using new powder A and new powder B as two or more kinds of new powder having different characteristics will be described. When the three-dimensional object fabrication apparatus 1 according to the present exemplary embodiment is used to perform fabrication for the first time, only the new powder A and the new powder B (new powder AB) are mixed and used for fabrication without recovered powder. For example, the new powder A and the new powder B are mixed in equal weight. However, the recovered powder is not limited to the same weight as that of the new powder A and the new powder B. The powder is scattered during the fabrication and is difficult to be fully recovered, and thus the recovery rates of the new powder A and the new powder B may be different. Therefore, the recovered powder may have different characteristics from that of the new powder AB. Therefore, the recovered powder has different characteristics from the new powder AB, and thus, improvement in fabrication quality when the recovered powder is reused is a problem.

Therefore, it is effective to determine the mixing ratio between each of the plurality of new powders and the recovered powder so that the mixed powder to be supplied to the fabrication unit 3 has desired characteristics, based on at least one of the information on the fabrication condition of the fabrication unit 3 or the information on the state of the powder 50.

### <Mixing ratio Adjustment Control>

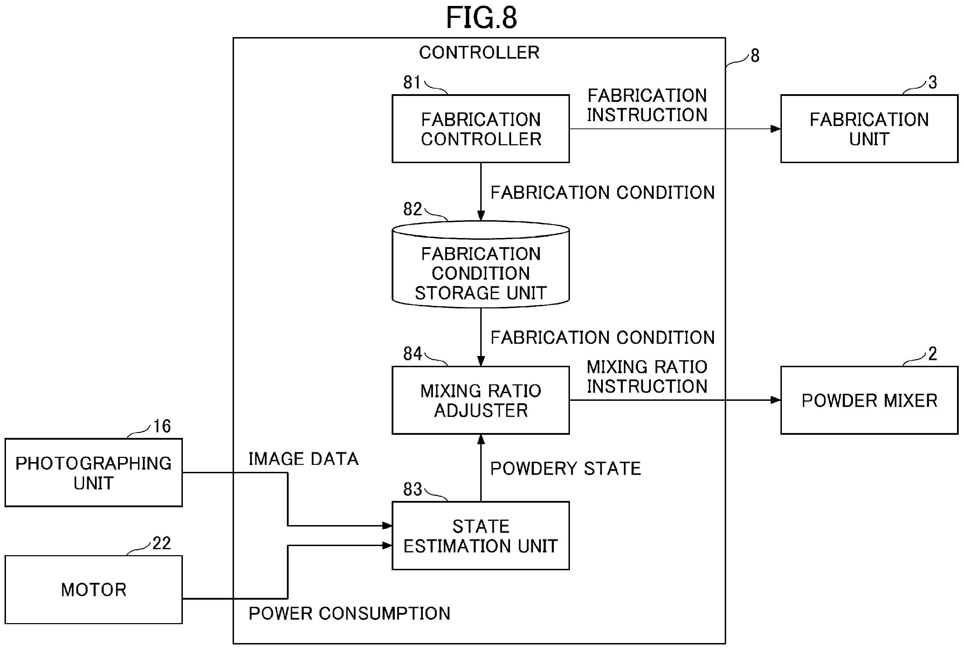

Next, the mixing ratio adjustment control according to the present embodiment will be described with reference to FIGS. 8 to 15B.

FIG. 8 is a functional block diagram of the controller 8 according to the embodiment of the present invention. The controller 8 includes a fabrication controller 81, a fabrication condition storage unit 82, a state estimation unit 83, and a mixing ratio adjuster 84.

The fabrication controller 81 controls the operation of the fabrication unit 3. When the fabrication data related to the three-dimensional fabricated object to be shaped are input from, for example, a fabrication data generator 104 outside the three-dimensional object fabrication apparatus 1, the fabrication controller 81 plans the fabrication operation of the fabrication unit 3 based on the fabrication data. Then, the fabrication controller 81 outputs a fabrication instruction based on the plan to the fabrication unit 3 and operates the fabrication unit 3 based on the fabrication instruction, thereby causing the fabrication unit 3 to perform a desired fabrication operation. The fabrication controller 81 outputs information on the fabrication condition of the fabrication unit 3 included in the fabrication instruction to the fabrication condition storage unit 82.

The fabrication condition storage unit 82 records information on the fabrication condition. Specifically, the information on the fabrication condition of the fabrication unit 3 input from the fabrication controller 81 is recorded and stored. Here, the fabrication condition includes information such as the volume of the fabricated object, the scanning rate of the flattening unit 31, the speed of rotation of the flattening unit 31, and the laminate thickness of the powder layer 51.

The state estimation unit 83 estimates information on the state of the powder 50. For example, the state estimation unit 83 receives an image of the powder 50 photographed by the photographing unit 16, and estimates information on the state of the powder 50 based on the image. Note that information on the state of the powder 50 may be estimated based on a measured value obtained by using an existing device without using an image. The power consumption of the motor 22 of the powder mixer 2 is also input to the state estimation unit 83, and the information on the state of the powder 50 can be estimated based on the power consumption. The state estimation unit 83 outputs the information on the state of the powder 50 (denoted as "powdery state" in FIG. 8) to the mixing ratio adjuster 84.

The mixing ratio adjuster 84 adjusts the mixing ratio of the new powder and the mixed powder based on at least one of the information of the fabrication condition recorded in the fabrication condition storage unit 82 or the information regarding the state of the powder 50 input from the state estimation unit 83. The mixing ratio adjuster 84 outputs a mixing ratio instruction for generating mixed powder at the adjusted mixing ratio to the powder mixer 2.

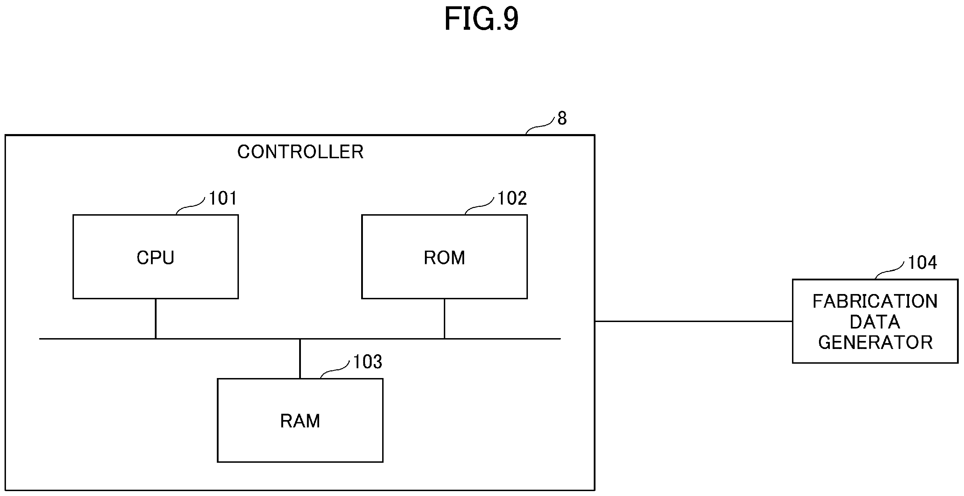

FIG. 9 is a diagram showing an example of a hardware configuration of the controller 8 according to the embodiment of the present invention.

As illustrated in FIG. 9, the controller 8 of the three-dimensional object fabrication apparatus 1 includes a central processing unit (CPU) 101, a read only memory (ROM) 102 that stores a program for executing control and other fixed data, and a random access memory (RAM) 103 that temporarily stores fabrication data and the like. The controller 8 also receives fabrication data from the fabrication data generator 104 such as an external computer. The fabrication data generator 104 generates object fabrication data obtained by slicing the fabricated object in the final form into the fabrication layers 61. The controller 8 controls the operation of fabrication for each fabrication layer 61. The fabrication data generator 104 may be provided separately from or integrally with the three-dimensional object fabrication apparatus 1. The controller 8 may be provided inside the three-dimensional object fabrication apparatus 1 or outside the three-dimensional object fabrication apparatus 1.

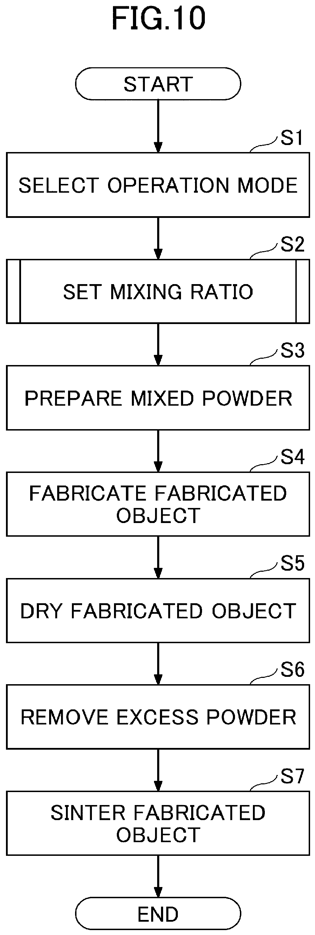

FIG. 10 is a flowchart of the fabrication control of the three-dimensional fabricated object according to the embodiment of the present invention. The flowchart shown in FIG. 10 shows a flow of a series of fabrication operations of a three-dimensional fabricated object performed by the three-dimensional object fabrication apparatus 1.

In step S1, a user of the three-dimensional object fabrication apparatus 1 selects an operation mode. The user performs an input operation of selecting a desired operation mode via an input device installed inside the three-dimensional object fabrication apparatus 1 or communicably connected to the outside, for example. Information of the selected operation mode is input to the mixing ratio adjuster 84 of the controller 8.

Here, the user can select, for example, any of a shape accuracy priority mode, a powder cost priority mode, and a fabrication speed priority mode as the operation mode. The mixing ratio of the new powder and the recovered powder after adjustment can be changed even under the same condition according to the selected operation mode. By implementing such mode selection, optimum fabrication can be performed according to the user. In the fabrication, the shape accuracy, the powder cost, and the fabrication speed are in a trade-off relationship. It is effective to select which of the operation modes is to be prioritized according to the user.

In the "shape accuracy priority mode", the ratio of the new powder in the mixed powder is increased. This is because, in general, the powder deteriorates when reused, leading to a decrease in the fabrication quality.

In the "powder cost priority mode", the ratio of the recovered powder in the mixed powder is increased. The cost is reduced by reusing the same. Since the powder deteriorates when reused, the fabrication quality may deteriorate when the ratio of the recovered powder is increased. However, for example, the fabrication quality can be kept constant by adjusting the speed of the flattening unit 31.

In the "fabrication speed priority mode", the ratio of the new powder or the recovered powder of the mixed powder is increased so that the fluidity of the powder 50 when the flattening unit 31 operates is increased. This allows the speed of the flattening unit 31 to be increased.

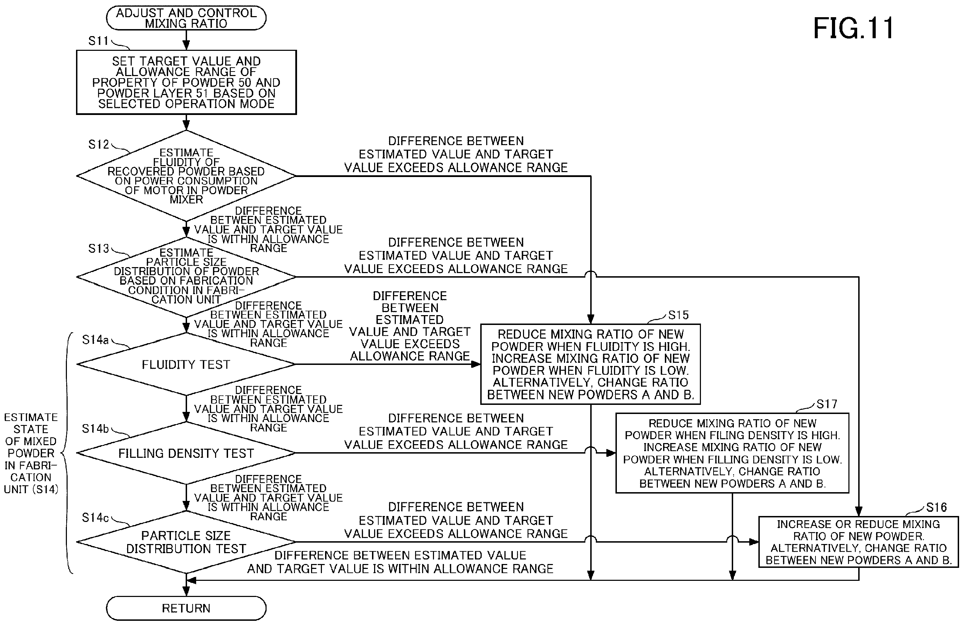

In step S2, the mixing ratio adjuster 84 sets the mixing ratio of the new powder and the recovered powder based on at least one of the information regarding the state of the powder 50 or the information regarding the fabrication condition of the fabrication unit 3 (mixing ratio adjustment step). The mixing ratio adjuster 84 can adjust and set the mixing ratio so as to be suitable for the operation mode selected in step S1 by performing each process of the flowchart of the mixing ratio adjustment control. In the mixing ratio adjustment control, a subroutine process shown in FIG. 11 is executed. The details of the mixing ratio adjustment control will be described later with reference to FIG. 11. Alternatively, the operation mode may not be selected in step S1, and the mixing ratio may be set in accordance with FIG. 11. The mixing ratio adjuster 84 outputs a mixing ratio instruction including information on the set mixing ratio to the powder mixer 2.

In step S3, the new powder and the recovered powder are mixed by the powder mixer 2 based on the mixing ratio set in step S2 (powder mixing step). The mixed powder mixed in the powder mixer 2 is supplied to the fabrication unit 3.

In step S4, the fabrication unit 3 fabricates the object to be fabricated using the mixed powder mixed in step S3 (fabrication step). Here, the operation of the fabrication unit 3 is controlled by the fabrication controller 81. The fabrication tank 12 in which the fabricated object is accommodated is conveyed from the fabrication unit 3 to the drying unit 4. The excess powder that has overflowed from the fabrication tank 12 in the fabrication unit 3 is recovered by the recovering unit 7 and supplied to the powder mixer 2 (recovery step).

In step S4, the fabrication controller 81 outputs information regarding the fabrication conditions of the fabrication unit 3 used in the fabrication process to the fabrication condition storage unit 82 and records the information in the fabrication condition storage unit 82. The fabrication conditions recorded in the fabrication condition storage unit 82 include information such as the volume of the fabricated object, the scanning rate of the flattening unit 31, the speed of rotation of the flattening unit 31, and the laminate thickness of the powder layer 51.

In step S5, the drying unit 4 dries the fabricated object formed in step S4. The drying unit 4 dries the fabricated object at a drying temperature and for a drying time according to a control command from the controller 8. The fabrication tank 12 in which the dried object is accommodated is transported from the drying unit 4 to the powder remover 5.

In step S6, the powder remover 5 removes excess powder from the fabricated object dried in step S4. The excess powder is recovered by the recovering unit 7 (recovery step). The fabricated object from which the excess powder has been removed is conveyed from the powder remover 5 to the sintering unit 6. The excess powder is recovered by the recovering unit 7 and supplied to the powder mixer 2.

In step S7, the fabricated object from which the excess powder has been removed in step S6 is sintered by the sintering unit 6. When the processing of step S7 is completed, the main flow is terminated.

FIG. 11 is a flowchart of the mixing ratio adjustment control according to the embodiment of the present invention. Each process (mixing ratio adjustment step) of the mixing ratio adjustment control shown in FIG. 11 is executed as a subroutine process in step S2 of FIG. 10.

In step S11, the mixing ratio adjuster 84 sets the target value and the allowance range based on the operation mode selected in step S1. The allowance range is, for example, a range in which a deviation from a target value can be allowed for an estimated value of the powder 50 estimated in the following steps S12 to S14. For example, when the "shape accuracy priority mode" is selected, the target value of the filling density of the powder layer 51 is increased so that the shape accuracy of the three-dimensional fabricated object is improved. As a result, the ratio of the new powder in the mixed powder is set to be relatively increased. When the "powder cost priority mode" is selected, the allowance ranges of the fluidity of the powder 50 and the fluidity and the filling density of the powder layer 51 are increased. As a result, the ratio of the recovered powder in the mixed powder is set to be relatively increased. When the "fabrication speed priority mode" is selected, the allowance range of the filling density of the powder layer 51 is set to be large according to the fluidity of the current mixed powder. As a result, the lower limit of the ratio of the new powder or the recovered powder in the mixed powder is larger than the reference value. This makes the fluidity of the mixed powder relatively high.

Then, the controller 8 controls the mixing ratio so as to change the mixing ratio of the powder 50 in accordance with the operation mode selected in step S1. By changing the target value and the allowance range according to the selected operation mode, it is possible to perform optimal fabrication according to the user. Furthermore, the optimum mixing ratio can be adjusted under the condition of the constraint imposed by the selected operation mode.

In step S12, the state estimation unit 83 estimates information on the state of the powder 50 based on the motor power consumption of the powder mixer 2. For example, the fluidity of the mixed powder or the recovered powder is estimated as the information on the state of the powder 50, and the mixing ratio is determined. The fluidity of the mixed powder or the recovered powder by the state estimation unit 83 is estimated from the power consumption of the motor 22. The power consumption of the motor 22 includes information such as a control value (PWM ratio for controlling ON / OFF) of the motor 22 and a current consumption of the motor 22.

The method of estimating the fluidity in the step S12 is, for example, as follows. The power consumption of the motor 22 is measured while making the amounts of the new powder and the recovered powder charged into the stirring tank 21 and the rotating speed of the motor 22 constant. Alternatively, the amount of the mixed powder to be charged into the stirring tank 21 is changed to measure the amount of change in the power consumption of the motor 22. Next, it is determined whether the power consumption is equal to or less than a predetermined value. Since the power consumption of the motor 22 is proportional to the fluidity of the powder 50, the fluidity can be estimated from the power consumption of the motor 22. In the case of measure the amount of change in the power consumption of the motor 22, it is determined whether all the power consumptions are equal to or less than a predetermined value.

When the power consumption of the motor 22 is equal to or less than a predetermined value, it is determined that the fluidity of the powder 50 is high. On the other hand, when the power consumption of the motor 22 is larger than the predetermined value, it is determined that the fluidity is low. In this method, a relatively large estimated value can be selected when the fluidity is determined to be high, and a relatively small estimated value can be selected when the fluidity is determined to be low.

In this way, the fluidity of the mixed powder and the recovered powder is estimated based on the driving force of the motor 22 such as the motor power consumption of the powder mixer 2. For example, when the mixing ratio of the new powder and the recovered powder is adjusted so that the motor power consumption becomes constant, the powder 50 in a range of fluidity necessary for improving the fabrication quality can be used for fabrication. In addition, since the motor power consumption can be easily acquired, information on the state of the powder 50 can be easily estimated.

When the deviation between the estimated value of the fluidity of the mixed powder or the recovered powder estimated in step S12 and the target value of the fluidity set in step S11 is within the allowance range set in step S11, the process proceeds to step S13. On the other hand, if the deviation exceeds the allowance range, the process proceeds to step S15, and the mixing ratio of the powder 50 is adjusted by the mixing ratio adjuster 84. The estimation of the driving force of the motor 22 may be omitted in S12, and the process may proceed to S13.

In step S15, when the estimated value of the fluidity is higher than the allowance range with respect to the target value, the mixing ratio of the new powder is decreased. Therefore, the mixing ratio is controlled so as to be lower than the fluidity of the current powder 50. On the other hand, when the estimated value of the fluidity is lower than the allowance range with respect to the target value, the mixing ratio of the new powder is increased. Therefore, the mixing ratio is controlled so as to increase from the fluidity of the current powder 50.

In addition, in step S15, in a case of a configuration in which a plurality of new powders are mixed, a mixing ratio of the plurality of new powders may be changed. For example, when the fluidity is increased, the ratio of the new powder having relatively higher fluidity may be increased. In addition, when the fluidity is decreased, the ratio of the new powder having relatively low fluidity may be increased. When the process of step S15 is completed, the process returns to the main flow of FIG. 10.

In step S13, the characteristics of the powder 50 used in the fabrication process are estimated by the mixing ratio adjuster 84 based on the information on the fabrication conditions of the fabrication unit 3. The mixing ratio adjuster 84 acquires information on the fabrication condition in the latest fabrication process from the fabrication condition storage unit 82, for example, and estimates information on the state of the powder 50. For example, the particle size distribution of the powder 50 is estimated.

When the deviation between the estimated value of the particle size distribution of the powder 50 estimated in step S13 and the target value of the particle size distribution set in step S11 is within the allowance range set in step S11, the process proceeds to step S14. On the other hand, if the deviation exceeds the allowance range, the process proceeds to step S16, and the mixing ratio of the powder 50 is adjusted by the mixing ratio adjuster 84. The estimation of the information on the fabrication condition of the fabrication unit 3 may be omitted in S13, and the process may proceed to S14 or S16.

In step S16, the mixing ratio of the new powder and the recovered powder is controlled to set the particle size distribution of the current powder 50 to fall within a desired range. In the step S16, in the case of a configuration in which a plurality of new powders are mixed, the mixing ratio of the plurality of new powders may be changed to control the mixing ratio so that the particle size distribution of the current powder 50 falls within a desired range. When the process of step S16 is completed, the process returns to the main flow of FIG. 10.

In step S14, the state estimation unit 83 performs a test for estimating the state of the mixed powder used in the fabrication unit 3. The tests were of three types: "Fluidity test (S14a)", "Filling density test (S14b)", and "Particle size distribution test (S14c)". In each test, first, the photographing unit 16 photographs an image of the surface of the powder 50. Next, the state estimation unit 83 estimates information on the state of the powder 50 based on the photographed image. For example, the fluidity, the filling density, the particle size distribution, and the like of the mixed powder are estimated as the information on the state of the powder 50.

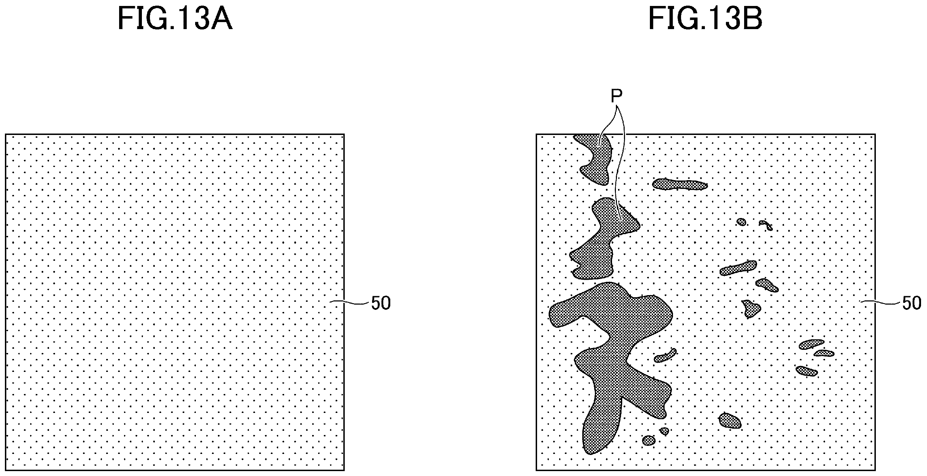

Here, an overview of each of the tests S14a to S14c performed in step S14 will be described with reference to FIGS. 13A to 15B.

### <Fluidity Test (S14a)>

The fluidity of the powder 50 may be either too low or too high as compared to the reference value, which affects the fabrication quality. If the fluidity of the powder 50 is too low, the powder 50 is not uniform in the flattening unit 31. In this case, a void may be formed in the powder layer 51, or a crack may be generated in the powder layer 51 due to a shearing force caused by the movement of the flattening unit 31. On the other hand, if the fluidity of the powder 50 is too high, the powder 50 in the lower layer also flows together every time the powder layer 51 is laminated, and the fabrication quality is deteriorated. Therefore, in the fluidity test of step S14a, the fluidity of the powder 50 is estimated from the photographed image of the photographing unit 16, and the mixing ratio of the new powder and the recovered powder is determined so that the powder 50 is in the predetermined range.

The outline of the fluidity test of the step S14a will be described with reference to FIGS. 13A and 13B. FIGS. 13A and 13B are examples of photographed images for fluidity estimation according to the embodiment of the present invention. In the fluidity test, for example, the photographing unit 16 photographs the surface of the powder 50 after the operation is performed by changing one or more of the scanning rate and the speed of rotation of the flattening unit 31. The fluidity of the powder 50 is estimated from the photographed image. This ensures that the unevenness P on the surface of the powder 50 more pronounced, and makes it easier determine the generation of the unevenness P from the photographed image. Further, since it is possible to determine at what scanning rate or speed of rotation of the flattening unit 31 the unevenness P occurs, it is possible to estimate the fluidity of the powder 50. FIG. 13A is an example of an image obtained by photographing the surface of the normal powder 50. In FIG. 13A, the surface of the powder 50 is uniform throughout.

On the other hand, FIG. 13B is an example of an image obtained by photographing the surface of the powder 50 which is not normal. FIG. 13B shows a state where the fluidity of the powder 50 is worse than that of FIG. 13A. In FIG. 13B, unevenness P is generated on the surface of the powder 50.

In the fluidity test of another method, for example, the operation of the flattening unit 31 is stopped at a timing before the flattening unit 31 reaches the other end from one end in the scanning direction in the middle of the operation by the flattening unit 31. Thus, the powder 50 in the portion of the powder layer 51 in contact with the flattening unit 31 is scattered in the scanning direction, and therefore the fluidity of the powder 50 can be estimated from the image obtained by photographing the surface of the powder 50 in a state where the powder 50 is scattered.

It is considered that the distance and area of the powder 50 scattered when the flattening unit 31 is stopped are increased as the fluidity of the powder 50 is improved. Further, the scattered powder 50 remains on the surface as the unevenness, and thus the scattering state can be determined from the photographed image. Therefore, for example, the fluidity of the powder 50 can be estimated by measuring, from the image, the distance of the powder 50 that has reached the farthest position along the scanning direction from the stop position of the flattening unit 31, the area of the region of the scattered powder 50, and the like. For example, as the fluidity is improved, the distance of the scattered powder 50 is increased, and the area of the region of the scattered powder 50 is increased.

When the fluidity of the powder 50 is too low as a result of the fluidity test, the mixing ratio of the new powder and the recovered powder is controlled so as to increase the fluidity of the powder 50 from the current fluidity. On the other hand, when the fluidity of the powder 50 is too good, the mixing ratio of the new powder and the recovered powder is controlled so as to be lower than the current fluidity of the powder 50.

In the flowchart of FIG. 11, when the deviation between the estimated value of the fluidity of the powder 50 estimated in step S14a and the target value of the fluidity set in step S11 is within the allowance range set in step S11, the process proceeds to step S14b. On the other hand, if the deviation exceeds the allowance range, the process proceeds to step S15, and the mixing ratio of the powder 50 is adjusted by the mixing ratio adjuster 84.

In step S15, when the estimated value of the fluidity is higher than the allowance range with respect to the target value, that is, when the estimated fluidity of the powder 50 is good, the mixing ratio of the new powder is decreased. Therefore, the mixing ratio is controlled so as to lower the fluidity. On the other hand, when the estimated value of the fluidity is lower than the allowance range with respect to the target value, that is, when the estimated fluidity of the powder 50 is bad, the mixing ratio of the new powder is increased. Therefore, the mixing ratio is controlled so as to increase the fluidity.

In addition, in step S15, in a case of a configuration in which a plurality of new powders are mixed, a mixing ratio of the plurality of new powders may be changed. For example, when the fluidity is increased, the ratio of the new powder having relatively higher fluidity may be increased. In addition, when the fluidity is decreased, the ratio of the new powder having relatively low fluidity may be increased. When the process of step S15 is completed, the process returns to the main flow of FIG. 10.

### <Filling density Test (S14b)>

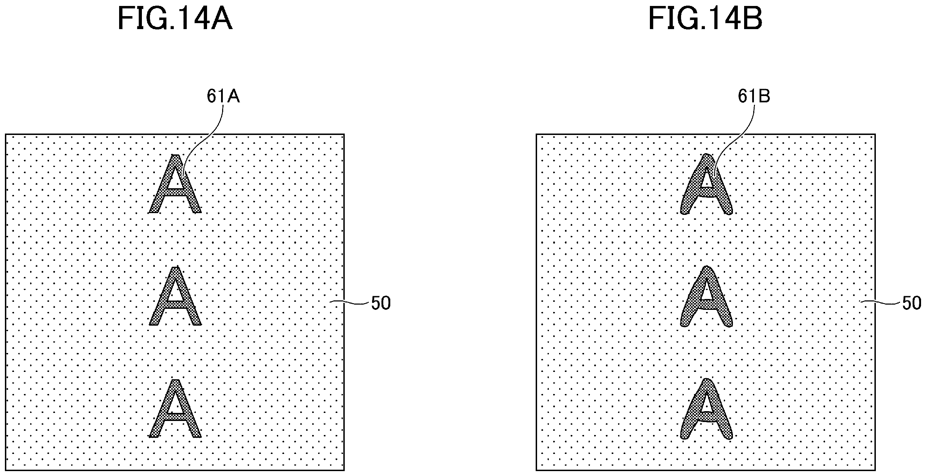

The outline of the filling test of the step S14b will be described with reference to FIGS. 14A and 14B. FIGS. 14A and 14B are examples of photographed images for filling density estimation according to the embodiment of the present invention. In the step S14b filling test, the fabrication liquid 60 is applied in an amount larger than a specified amount, and the surfaces of the powder 50 are photographed after a predetermined time has elapsed. The filling density is estimated from the photographed image.

When the filling density is high, the fabrication liquid 60 permeates and the fine shape is crushed, and the fabrication quality deteriorates. This may cause a change in characteristics such as an improvement in wettability between the powder 50 and the fabrication liquid 60 and a decrease in viscosity of the fabrication liquid 60.

On the other hand, when the filling density is low, the fabrication quality is not deteriorated by the permeation of the fabrication liquid 60. However, there is a possibility that a change in characteristics such as a decrease in wettability between the powder 50 and the fabrication liquid 60 and an increase in viscosity of the fabrication liquid 60 may occur.

The permeation of the fabrication liquid 60 occurs over a long time, and particularly in the drying unit 4, the viscosity of the fabrication liquid 60 decreases and the permeation proceeds. Therefore, even if the surface of the powder 50 is photographed after the fabrication liquid 60 is applied, the permeation of the fabrication liquid 60 cannot be determined. Therefore, in the filling density test, the fabrication liquid 60 is applied in an amount larger than the specified amount to accelerate the permeation of the fabrication liquid 60 into the powder 50, and the filling density is determined in a short time. Therefore, the mixing ratio of the powder 50 is determined by determining a bleeding of the fabrication liquid 60 into the powder 50 from the photographed image of the photographing unit 16 and estimating the filling density. Thus, the filling density of the powder 50 is adjusted to a predetermined range, and the fabrication quality is improved. The amount of the fabrication liquid 60 to be applied may be adjusted together with the determination of the mixing ratio of the powder 50.

FIGS. 14A and 14B shows images photographed by the photographing unit 16 ten minutes after the fabrication liquid 60 is applied to the surface of the powder 50. FIG. 14A shows an image in the case where the fabrication liquid 60 is applied twice as much as the specified amount, and FIG. 14B shows an image in the case where the fabrication liquid 60 is applied four times as much as the specified amount. When the two images photographed by changing the prescribed amount of the fabrication liquid 60 do not have a bleeding, it is determined that the filling density is appropriate. If one or more of the two images is bled, it is determined that the filling density is high. For example, in FIG. 14A, no bleeding occurs in the character "A" which is the test image 61A, but in FIG. 14B, a bleeding occurs in the character "A" which is the test image 61B. Therefore, it is determined that the filling density is high in FIGS. 14A and 14B. In this way, in the filling density test, the amount of the fabrication liquid 60 is changed from the specified amount, and the degree of bleeding is determined from the image. Thus, the filling density of the powder 50 can be estimated.

When the degree of permeation is large as a result of the filling density test, the mixing ratio of the new powder and the recovered powder is adjusted so as to lower the filling density of the current powder 50.

In the flowchart of FIG. 11, when the deviation between the estimated value of the filling density of the powder 50 estimated in step S14b and the target value of the filling density set in step S11 is within the allowance range set in step S11, the process proceeds to step S14c. On the other hand, if the deviation exceeds the allowance range, the process proceeds to step S17, and the mixing ratio of the powder 50 is adjusted by the mixing ratio adjuster 84.

In step S17, when the estimated value of the filling density is higher than the target value by more than the allowance range, that is, when the estimated filling density of the powder 50 is high and the degree of permeation is relatively small, the mixing ratio of the new powder is decreased. Therefore, the mixing ratio is controlled so that the filling density of the powder 50 is decreased from the current filling density and the degree of permeation is increased to an appropriate value. On the other hand, when the estimated value of the filling density is lower than the allowance range with respect to the target value, that is, when the estimated filling density of the powder 50 is low and the degree of permeation is relatively large, the mixing ratio of the new powder is increased. Therefore, the mixing ratio is controlled so that the current filling density of the powder 50 is increased and the degree of permeation is decreased to an appropriate value.

In addition, in step S17, in a case of a configuration in which a plurality of new powders are mixed, a mixing ratio of the plurality of new powders may be changed. For example, when the filling density is increased, the ratio of the new powder having a relatively higher filling density may be increased. Further, when the filling density is decreased, the ratio of the new powder having a relatively low filling density may be increased. When the process of step S17 is completed, the process returns to the main flow of FIG. 10.

### <Particle Size Distribution Test (S14c)>

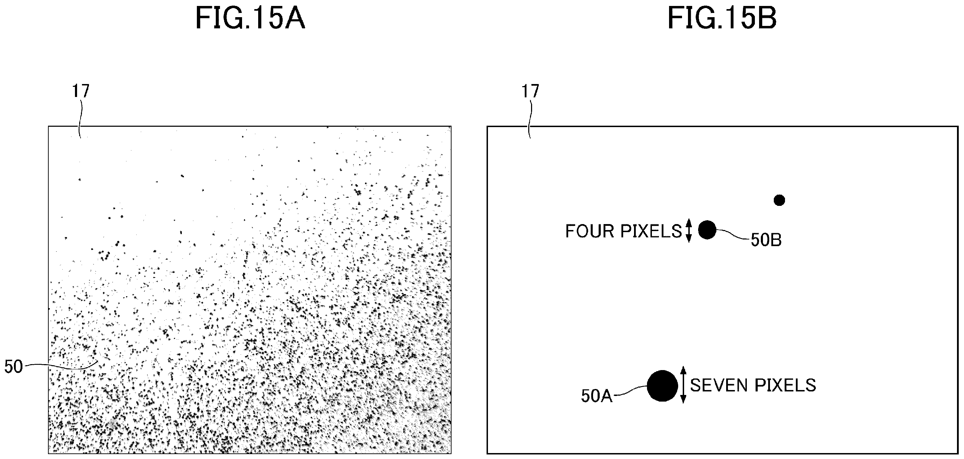

The outline of the particle size distribution test of the step S14c will be described with reference to FIGS. 15A and 15B. FIGS. 15A and 15B are examples of photographed images for particle size distribution measurement according to the embodiment of the present invention. In the particle size distribution test of the step S14c, the powder 50 is dispersed on the glass surface 17, and the dispersed powder 50 is photographed. The size of the particles contained in the powder 50 is measured from the photographed image, and the particle size distribution is estimated.

The particle size distribution of the powder 50 affects the presence or absence of defects, the strength, and the progress of sintering of the fabricated object, and affects the fabrication quality. When the particle size distribution of the powder 50 is outside the predetermined range, the fabrication quality is degraded. Therefore, the particle size distribution of the powder 50 is determined from the photographed image, and the mixing ratio of the new powder and the recovered powder is determined so that the particle size distribution is in the predetermined range.

FIG. 15A is an example of an image photographed by dispersing the powder 50 on the glass surface 17 and switching to the magnifying lens. Since light is applied from below the glass surface 17 and the particles of the powder 50 can be identified one by one, the number of particles of the powder 50 included in the image can be counted. FIG. 15B is a partially enlarged image of the image of FIG. 15A. In FIG. 15B, two particles 50A and 50B are enlarged, and the diameters of the particles can be obtained. In FIG. 15B, the particle 50A has a size corresponding to seven pixels of the photographed image, and the particle 50B has a size corresponding to four pixels. The particle size distribution is determined by measuring the size of the diameter of each particle of the powder 50 included in the photographed image, counting the number of particles, and creating a histogram.

In the flowchart of FIG. 11, when the deviation between the estimated value of the particle size distribution of the powder 50 estimated in step S14c and the target value of the particle size distribution set in step S11 is within the allowance range set in step S11, the process returns to the main flow of FIG. 10. On the other hand, if the deviation exceeds the allowance range, the process proceeds to step S16, and the mixing ratio of the powder 50 is adjusted by the mixing ratio adjuster 84.

In step S16, the mixing ratio of the new powder and the recovered powder is controlled so that the particle size distribution of the current powder 50 is within a desired particle size distribution range. In addition, in step S16, in a case of a configuration in which a plurality of new powders are mixed, the mixing ratio of the plurality of new powders may be changed to control the mixing ratio such that the particle size distribution of the current powder 50 is in a desired particle size distribution range. When the process of step S16 is completed, the process returns to the main flow of FIG. 10.

The glass surface 17 used in the particle size distribution test is installed at a position different from the fabrication tank 12 in the fabrication unit 3, for example. The glass surface 17 is installed within the range of the angle of view of the photographing unit 16, or is set at a position where the photographing unit 16 can move and photograph the glass surface 17 at the time of the particle size distribution test.

In the present embodiment, the powder 50 is dispersed on the glass surface 17 having a transparent background of the image so that the particle size distribution can be easily determined from the powder surface image. However, the powder surface image of the surface of the fabrication tank 12 may be used. In this case, for example, if preprocessing such as extracting the powder 50 on the surface from the powder surface image is performed using a known image processing method, the particle size distribution can be measured.

In this way, in step S14, the state estimation unit 83 estimates the fluidity, the filling densities, and the particle size distributions of the powder 50 and the powder layer 51 as the information on the state of the powder 50 based on the images of the surfaces of the powder 50 photographed by the photographing unit 16. With this configuration, it is possible to accurately estimate the state of the powder 50 using the photographed image of the photographing unit 16, and to perform estimation with a simple configuration and at low cost. Further, based on the information on the state of the powder 50 estimated in this way, the mixing ratio is determined so that one or more of the fluidity, the filling density, and the particle size distribution are in the predetermined range. Thus, even when the recovered powder is reused, the fabrication quality is improved.

The information on the state of the powder 50 estimated by the state estimation unit 83 in step S14 may be at least one of the fluidity, the filling density, or the particle size distribution of the powder 50, or may be a combination thereof. Further, a configuration may be adopted in which something other than the fluidity, the filling density, and the particle size distribution are estimated. The fluidity, the filling density, and the particle size distribution of the powder 50 are estimated based on the image, but may be measured using an existing measuring device. In this case, one or more of the new powder, the recovered powder, and the mixed powder may be measured, and the mixing ratio may be determined based on the measured value.

The three types of tests, i.e., the "fluidity test (S14)", the "filling density test (S14a)", and the "particle size distribution test (S14b)", which are performed by the state estimation unit 83 in step S14c, are not particularly limited in terms of the timing at which they performed, but are preferably performed in advance before an actual fabrication operation. It may be difficult to perform the test during the actual fabrication operation of the fabrication unit 3. For example, the execution conditions include intentionally making the unevenness P easily occur on the powder surface in the fluidity test, applying the fabrication liquid 60 more than usual in the filling density test, and dispersing the powder 50 on the glass surface 17 different from the fabrication tank 12 in the particle size distribution test. The timing is, for example, before the start of fabrication in the three-dimensional object fabrication apparatus 1, when the three-dimensional object fabrication apparatus 1 is activated, when the three-dimensional object fabrication apparatus 1 receives new fabrication data from the fabrication data generator 104, or the like. Alternatively, the time when the three-dimensional object fabrication apparatus 1 is fabrication an object includes the time when the three-dimensional object fabrication apparatus 1 completes fabrication one three-dimensional fabricated object and transits to fabrication another three-dimensional fabricated object. Further, each test may be performed periodically, at any timing, or in response to an operation command from the user, regardless of the fabrication operation of the three-dimensional object fabrication apparatus 1.

In this way, in the flowchart of the mixing ratio adjustment control shown in FIG. 11, the mixing ratio adjuster 84 adjusts the mixing ratio so that the mixing ratio between the new powder and the recovered powder becomes optimal using (1) to (4) as the four types of determination indices.
(1) The mixing ratio is determined based on the operation mode set, in step S11;
(2) The mixing ratio is determined from the information on the fluidity of the recovered powder based on the power consumption of the motor 22 of the powder mixer 2 estimated by the state estimation unit 83, in step S12;
(3) The mixing ratio is determined based on the information of the fabrication condition of the fabrication unit 3 recorded in the fabrication condition storage unit 82, in step S13; and
(4) The mixing ratio is determined by the state estimation unit 83 from one or more pieces of information of the fluidity, the filling density, and the particle size distribution as the information regarding the state of the powder 50 based on the photographed image of the photographing unit 16, in step S14.

The mixing ratio adjuster 84 can grasp the current characteristics of the powder 50 with reference to the determination indices (1) to (4). Then, the mixing ratio of the new powder and the recovered powder is adjusted so that the powder 50 has desired characteristics. For example, predetermined ranges are set for information on the state of the powder 50 such as the fluidity, the filling density, and the particle size distribution of the powder 50, and each information on the state of the powder 50 is set to be within the predetermined range. The fabrication quality is improved by adjusting the mixing ratio so that the powder 50 has desired characteristics.

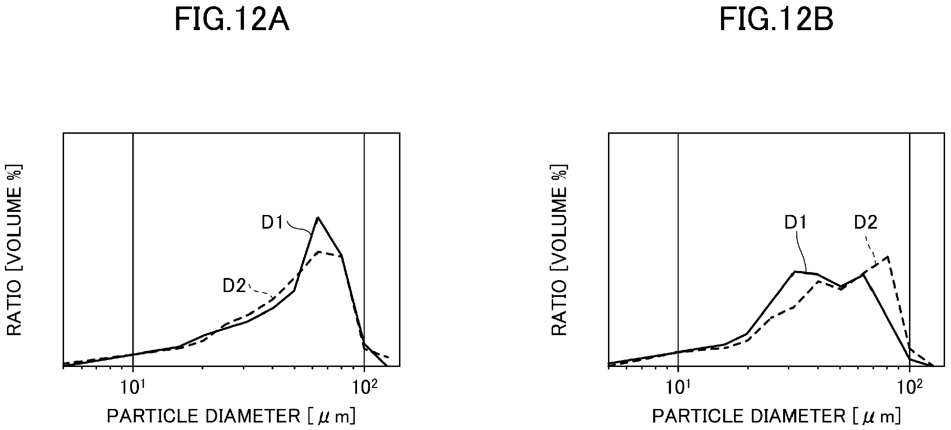

Here, the effect of applying the determination index (3) will be described with reference to FIGS. 12A and 12B. FIGS. 12A and 12B are diagrams illustrating the influence of the fabrication conditions on the state of the powder 50 according to the embodiment of the present invention. FIGS. 12A and 12B show the particle size distribution of the recovered powder when the powder layer 51 is formed with the laminate thickness of 102 µm and 66 um, respectively. The horizontal axis of the particle size distribution represents a diameter (µm) of a particle contained in the recovered powder, and the vertical axis represents a ratio (vol%) of each particle diameter to the total recovered powder. That is, the vertical axis represents the volume ratio of each particle to the volume of the entire recovered powder. A particle size distribution D1 of the recovered powder of the powder remover 5 is indicated by a solid line, and a particle size distribution D2 of the recovered powder of the fabrication unit 3 is indicated by a dotted line.

If the particle size distribution of the mixed powder used in the fabrication unit 3 and the fabrication conditions of the scanning rate and the speed of rotation of the flattening unit 31 and the laminate thickness of the powder layer 51 are unchanged, the particle size distribution of the powder recovered in the fabrication unit 3 and the particle size distribution of the powder recovered in the powder remover 5 are substantially the same every time. Therefore, when the fabrication is performed under various fabrication conditions in advance and the particle size distribution of the powder recovered from the fabrication unit 3 and the particle size distribution of the powder recovered from the powder remover 5 are recorded, the particle size distribution of the recovered powder can be estimated in each of the fabrication unit 3 and the powder remover 5 from the fabrication conditions in actual fabrication.

In FIG. 12A, the particle size distribution D2 of the powder 50 recovered from the fabrication unit 3 is substantially the same as the particle size distribution D1 of the powder 50 recovered from the powder remover 5. On the other hand, in FIG. 12B, the ratio of the powder 50 having a large particle diameter is high in the particle size distribution D2 of the powder 50 recovered from the fabrication unit 3, and the ratio of the powder 50 having a small particle diameter is high in the particle size distribution D1 of the powder 50 recovered from the powder remover 5. As described above, the particle size distributions D1 and D2 of the powder 50 recovered from the fabrication unit 3 and the powder 50 recovered from the powder remover 5 may be different from each other. The difference depends on the layer thickness.

FIGS. 12A and 12B illustrate the influence on the particle size distribution when the laminate thickness of the powder layer 51 is changed among the fabrication conditions of the fabrication unit 3, as above. However, the particle size distribution is similarly considered to be influenced also by a change in other parameters of the fabrication conditions, such as the scanning rate and the speed of rotation of the flattening unit 31, or the volume of the fabricated object. In addition, the packing density and the fluidity, or the like, other than the particle size distribution, may also be affected.

Therefore, as in the determination index (3), by considering the fabrication condition of the fabrication unit 3, it is possible to grasp a change in the state of the mixed powder such as the particle size distribution, and thus it is possible to more appropriately adjust the mixing ratio.

The procedure of the estimation of the powder 50 and the adjustment of the mixing ratio based on the fabrication condition in the determination index (3) is, for example, as follows. First, the relationship among the conditions of the scanning rate of the flattening unit 31, the speed of rotation of the flattening unit 31, and the laminate thickness of the powder layer 51, and the characteristics (here, for example, particle size distribution) of the powder 50 recovered from the fabrication unit 3 and the powder 50 recovered from the powder remover 5 when fabrication is performed under the conditions is examined in advance. The relationship between the fabrication conditions and the characteristics of the powder 50 acquired in this way is retained by, for example, the mixing ratio adjuster 84.

Next, in step S13 of FIG. 11, the particle size distribution of the powder 50 recovered from the fabrication unit 3 and the particle size distribution of the powder 50 recovered from the powder remover 5 are estimated under the actual fabrication conditions using the relationship acquired in this way. If there is no data of the same condition as the fabrication condition examined in advance, the estimation may be performed by interpolation.

The particle size distribution of all the recovered powder is obtained by calculating a weighted average of the particle size distribution of the powder 50 recovered from the fabrication unit 3 and the particle size distribution of the powder 50 recovered from the powder remover 5 based on the ratio of the amounts of the respective powders 50. The amount of the powder 50 recovered from the fabrication unit 3 is the amount of the powder 50 overflowing from the fabrication tank 12, and can be estimated from the amount of vertical movement of the bottom surfaces of the supply tank 11 and the fabrication tank 12. The amount of the powder 50 recovered from the powder remover 5 can be estimated by subtracting the volume of the fabricated object from the volume of the fabrication tank 12.

In this way, the particle size distribution of the recovered powder can be estimated, and the amount of the new powder to be mixed is determined so that the particle size distribution becomes the desired particle size distribution. That is, in step S16 of FIG. 11, when the particle size distribution of the recovered powder is largely changed from the original particle size distribution, the new powder is mixed in a larger amount than the predetermined amount. On the other hand, when the particle size distribution of the recovered powder is not largely changed from the original particle size distribution, the new powder is mixed by reducing the predetermined amount.

Further, when a plurality of new powders having different particle diameters are mixed as the plurality of kinds of new powders, for example, the mixing ratio of the plurality of new powders is adjusted to obtain a desired particle size distribution.

In step S13 of FIG. 11, the configuration configured to estimate the particle size distribution of the powder 50 from the fabrication conditions of the fabrication unit 3 based on the example of FIGS. 12A and 12B was exemplified. From the fabrication conditions, it is possible to estimate, for example, the filling density and the fluidity, in addition to the particle size distribution. For example, in the case of applying a configuration in which the filling densities are estimated from the fabrication conditions in step S13, the flowchart of FIG. 11 may be changed so that the process proceeds to step S17 when the deviation between the estimated value and the target value exceeds the allowance range. Similarly, in the case of applying the configuration of estimating the fluidity from the fabrication conditions in step S13, the flowchart of FIG. 11 may be changed so that the process proceeds to step S15 when the deviation between the estimated value and the target value exceeds the allowance range.

By adjusting the mixing ratio based on such a fabrication condition, the fabrication quality can be improved even when the recovered powder is used.

The mixing ratio adjuster 84 outputs information on the adjusted mixing ratio to the powder mixer 2 as a mixing ratio instruction. In step S2 of FIG. 10, a desired mixing ratio is set based on the mixing ratio instruction input from the mixing ratio adjuster 84. Subsequently, in step S3, the mixed powder is generated by the mixing ratio adjuster 84 so as to have a desired mixing ratio after adjustment.

Effects of the three-dimensional object fabrication apparatus 1 according to the present embodiment will be described. The three-dimensional object fabrication apparatus 1 includes a fabrication unit 3 that fabricates a fabricated object containing powder 50, a recovering unit 7 that recovers at least a part of the powder 50 as recovered powder, a powder mixer 2 that mixes two or more kinds of powder including the recovered powder, and a controller 8 that controls a mixing ratio of the two or more kinds of powder mixed in the powder mixer 2 based on information about a state of the powder 50 and information about a fabrication condition of the fabrication unit 3.

In the three-dimensional object fabrication apparatus 1 of the present embodiment, in three-dimensional fabrication, excess powder around a fabricated object is recovered after a fabrication step and a drying step, and the recovered powder is reused. The recovered powder may be in a different state from the powder before the fabrication, for example, the fluidity may be reduced. On the other hand, in order to maintain the fabrication quality constant, it is desirable that the mixed powder generated by mixing the new powder and the recovered powder in the powder mixer 2 satisfies a desired reference value. Therefore, the mixing ratio of the new powder and the recovered powder in the powder mixer 2 needs to be appropriately adjusted according to the state of the recovered powder.

Therefore, in the present embodiment, the mixing ratio between the new powder and the recovered powder is adjusted using two types of information, that is, first information regarding the state of the powder 50 and second information regarding the fabrication conditions of the fabrication unit 3. By adjusting the mixing ratio based on the plurality of types of information in this way, the fabrication quality is improved.

In the present embodiment, the mixing ratio adjuster 84 of the controller 8 adjusts the mixing ratio of two or more types of powder mixed in the powder mixer 2 using both the information on the state of the powder 50 and the information on the fabrication conditions of the fabrication unit 3. However, the information to be referred to for the mixing ratio adjustment may be at least one of the information on the state of the powder 50 or the information on the fabrication conditions of the fabrication unit 3. That is, the mixing ratio may be adjusted using at least some of the four determination indices (1) to (4) described in step S15.

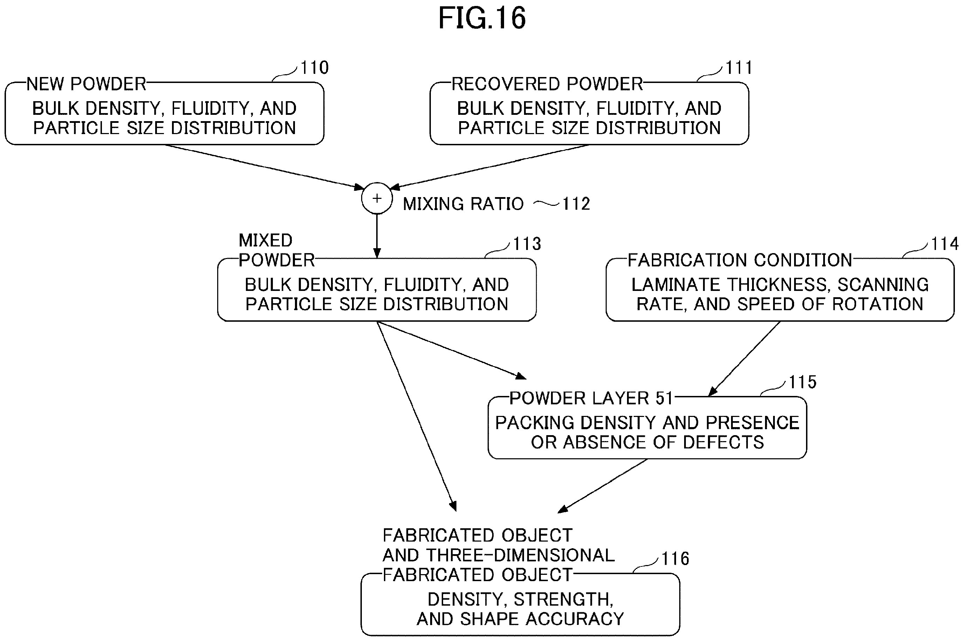

In the three-dimensional object fabrication apparatus 1 of the present embodiment, the fabrication quality can be improved by the mixing ratio adjuster 84 of the controller 8 adjusting the mixing ratio of the new powder and the recovered powder to an optimal mixing ratio. Here, the influence of the powder 50, the powder layer 51, and the mixing ratio on the three-dimensional fabricated object will be described with reference to FIG. 16. FIG. 16 is a diagram showing the dependency of the powder 50 and the powder layer 51 on the three-dimensional fabricated object according to the embodiment of the present invention.

The new powder and the recovered powder are mixed at any mixing ratio in the powder mixer 2 to produce mixed powder. Therefore, the filling density, the fluidity, and the particle size distribution as the information 113 on the state of the mixed powder depend on the information 110 on the state of the new powder, the information 111 on the state of the recovered powder, and the mixing ratio 112 of the mixed powder. The powder layer 51 is formed in the fabrication unit 3 using the mixed powder. Therefore, the packing density and the presence or absence of defects as the information 115 on the state of the powder layer 51 depend on the information 113 on the state of the mixed powder and the laminate thickness, the scanning rate, and the speed of rotation as the information 114 on the fabrication condition of the fabrication unit 3. The fabricated object is processed by the drying unit 4, the powder remover 5, and the sintering unit 6, thereby completing the three-dimensional fabricated object. Therefore, the density, the strength, and the shape accuracy as the information 116 on the fabricated object and the three-dimensional fabricated object state depend on the information 113 on the state of the mixed powder and the information 115 on the state of the powder layer 51.

Factors that change the information 116 about the fabricated object and the state of the three-dimensional fabricated object will be described. The information 111 regarding the state of the recovered powder is deteriorated when the fabrication is repeated, and thus varies greatly. The information 110 on the state of the new powder does not vary as much as the characteristics of the recovered powder, but varies depending on the manufacturing lot. The information 113 on the state of the mixed powder depends on the information 110 on the state of the new powder, the information 111 on the state of the recovered powder, and the mixing ratio 112, but these are not in a linear relationship. That is, even if the information 110 on the state of the new powder and the information 111 on the state of the recovered powder are accurately known, it is difficult to accurately predict the information 113 on the state of the mixed powder.

The three-dimensional object fabrication apparatus 1 may shape the three-dimensional fabricated object such that the information 116 regarding the fabricated object and the state of the three-dimensional fabricated object falls within an allowance range. The dependency relationship illustrated in FIG. 16 is modeled in advance (hereinafter, referred to as "powder 50 and three-dimensional fabricated object model"). The mixing ratio adjuster 84 controls the mixing ratio 112 so that the information 113 regarding the state of the mixed powder and the information 115 regarding the state of the powder layer 51 become target values.

Here, the correspondence between the four types of determination indices (1) to (4) used by the mixing ratio adjuster 84 and FIG. 16 will be described.

The determination index (1) is the target value and the allowance range of the mixing ratio based on the operation mode set in step S11 of FIG. 11. In FIG. 16, the determination index (1) corresponds to adjustment of the target values of the information 113 regarding the state of the mixed powder and the information 115 regarding the state of the powder layer 51, and adjustment of the configurable range of the information 114 regarding the fabrication condition.

The determination index (2) is information on the fluidity of the powder 50 estimated in step S12 of FIG. 11. In FIG. 16, the determination index (2) corresponds to the information 113 on the state of the mixed powder or the information 111 on the state of the recovered powder.

The determination index (3) is information of the fabrication condition used in step S13 of FIG. 11. In FIG. 16, the determination index (3) corresponds to the information 111 about the state of the recovered powder.

The determination index (4) is the fluidity, the filling density, and the particle size distribution of the mixed powder estimated in step S14 of FIG. 11. In FIG. 16, the determination index (4) corresponds to the information 113 about the state of the mixed powder, and the information 115 about the state of the powder layer 51.

A specific method of adjusting the mixing ratio to an optimum value by the mixing ratio adjuster 84 will be described.

The target values and the allowance ranges of the information 113 on the state of the mixed powder and the information 115 on the state of the powder layer 51; and the set values of the information 114 on the fabrication conditions are determined in advance. When the operation mode is selected in step S11, these ranges are adjusted.

For example, when the "shape accuracy priority mode" is selected, the allowance range of the particle size distribution of the information 113 regarding the state of the mixed powder is set to be narrow, and the target value of the packing density of the information 115 regarding the state of the powder layer 51 is set to be high. The mixing ratio 112 is determined so as to satisfy these set values.

For example, when the "powder cost priority mode" is selected, the mixing ratio 112 is determined so that the amount of recovered powder is increased while the target values of the information 113 regarding the state of the mixed powder and the information 115 regarding the state of the powder layer 51; and the set value of the information 114 regarding the fabrication condition are within the allowance range.

For example, when the "fabrication speed priority mode" is selected, the allowance range of the scanning rate of the information 114 regarding the fabrication condition is set to be wide. The mixing ratio 112 is determined in consideration of the information 113 regarding the state of the mixed powder and the information 115 regarding the state of the powder layer 51 so as to satisfy the setting.

In step S12, the fluidity is estimated as the information 113 on the state of the mixed powder. Alternatively, the fluidity is measure as the information 111 on the state of the recovered powder by a method described in "characteristic obtaining mode" described later. The difference between the measured fluidity and the target value is obtained, and the mixing ratio 112 is changed based on the three-dimensional fabricated object model so that the difference is reduced.

Since the fabrication conditions of the fabrication unit 3 are recorded in step S13, the information 111 regarding the state of the recovered powder can be estimated. The mixing ratio 112 is changed based on the three-dimensional fabricated object model from the information 111 on the estimated state of the recovered powder so that the information 113 on the state of the mixed powder with the new powder becomes equal to the target value.

In step S14, the information 113 on the state of the mixed powder and the information 115 on the state of the powder layer 51 are estimated, and the mixing ratio 112 is changed based on the powder 50 and the three-dimensional fabricated object model so that these pieces of information become equal to the target values.

The three-dimensional object fabrication apparatus 1 of the present embodiment includes the state estimation unit 83 that estimates information on the state of the powder 50. The mixing ratio adjuster 84 of the controller 8 adjusts the mixing ratio based on the information estimated by the state estimation unit 83. With this configuration, the mixing ratio can be adjusted using the information on the state of the powder 50 estimated by the state estimation unit 83, and thus the mixing ratio can be adjusted to a more appropriate value.

### <Mixing ratio Adjustment Control according to First Variation>

The mixing ratio adjustment control may be configured to have a mode in which the powder mixer 2 mixes new powder or recovered powder at a predetermined ratio. Specifically, a "calibration mode" in which only new powder is used and a "characteristic acquisition mode" in which only recovered powder is used to acquire the characteristics of the recovered powder can be added.

### (Calibration Mode)

In the calibration mode, the powder mixer 2 supplies only new powder to the fabrication unit 3. Then, information on the state of the new powder at this time is acquired. For example, the tests in step S14 are performed, and the fluidity, the filling density, and the particle size distribution are estimated from the image photographed by the photographing unit 16. Further, as in step S12, the fluidity is estimated from the driving force of the motor 22 of the powder mixer 2. The state estimation unit 83 is calibrated by comparing the estimated information and the known information, assuming that the information regarding the state of the new powder is known.

Alternatively, the powder mixer 2 illustrated in FIG. 7 has a first pattern in which only the new powder A is supplied to the fabrication unit 3 and a second pattern in which only the new powder B is supplied to the fabrication unit 3. The state estimation unit 83 may be calibrated by estimating information on the state of the powder 50 in each pattern.

By providing such a calibration mode, the fabrication quality is improved even when the recovered powder is used.

Here, the estimation of the fluidity by the state estimation unit 83 based on the driving force of the motor 22 of the powder mixer 2 will be described. As the motor 22 is used, the proportional relationship between the driving force and the fluidity changes due to adhesion of powder, wear, and the like, which causes an estimation error. If this error can be eliminated, the estimation accuracy is improved.

Here, the control value and the consumption current of the motor 22 in the case of stirring only the new powder are recorded in advance.

First, in the calibration mode, only new powder is charged into the stirring tank 21 of the powder mixer 2. Next, the control value of the motor 22 or the current consumption of the motor 22 is measure. Preferably, the pre-recorded value is the same as the measured value. On the other hand, if the values are different, a correction factor is calculated to correct the measured value.

Even when the new powders A and B are used, the control value of the motor 22 or the consumption current of the motor 22 is measure in the first pattern and the second pattern, respectively. The fluidities, control values, and power consumptions of the new powder A and the new powder B are recorded in advance. If the values measured in the first and second patterns are different from the recorded values, the correction coefficient is calculated to correct the measured values.

### (Characteristic Acquisition Mode)

In the characteristic acquisition mode, the powder mixer 2 supplies only the recovered powder to the fabrication unit 3. Then, information on the state of the recovered powder at this time is estimated, and information on the state of the recovered powder is estimated based on the estimated information. The information on the state of the recovered powder is estimated based on the respective tests in step S14 and the driving force of the motor 22 of the powder mixer 2 in step S12, as in the calibration mode. When the estimated information on the state of the recovered powder is largely changed from the information on the state of the mixed powder, the recovered powder is preferably discarded.

By providing such a characteristic acquisition mode, the fabrication quality is improved even when the recovered powder is reused.

### <Mixing ratio Adjustment Control according to Second Variation>

In the mixing ratio adjustment control, the controller 8 may be configured to impose a restriction on the fabrication condition of the fabrication unit 3 in accordance with the information on the state of the mixed powder.

As a specific example, the range set for the fabrication condition is changed according to the information regarding the estimated state of the powder 50. For example, the fluidity is acquired in step S12 or step S14. According to the fluidity, the maximum value of the scanning rate of the flattening unit 31 is increased when the fluidity is high, and the maximum value of the scanning rate of the flattening unit 31 is decreased when the fluidity is low.

By providing the restriction on the fabrication condition of the fabrication unit 3 in accordance with the information on the state of the powder 50 as described above, a fabrication condition that does not match the information on the state of the powder 50 is prevented from being set, and the fabrication quality is improved.

The fluidity of the mixed powder affects the fabrication quality. Therefore, the maximum value of the recoat speed of the flattening unit 31 changes depending on the fluidity. Therefore, the fluidity is estimated based on the image photographed in step S14 or the power consumption in step S12, and the maximum value of the fabrication condition of the flattening unit 31 is changed. This prevents the setting of the fabrication condition that does not match the information on the state of the powder 50, and the fabrication quality is improved.

### <Mixing ratio Adjustment Control according to Third Variation>

In the mixing ratio adjustment control, a communication unit that transmits information on the state of the powder 50 or information on the fabrication condition of the fabrication unit 3 to an external device may be provided, and the controller 8 may control the mixing ratio based on an instruction received from the external device via the communication unit. The external device may be a cloud system.

The three-dimensional object fabrication apparatus 1 is connected to a service provider that supports the apparatus operation via the communication unit. The three-dimensional object fabrication apparatus 1 transmits information such as the fabrication condition of the step S13, the image of the step S14, and the measurement value of the step S12 to the external device. The external device estimates information on the state of the powder 50 based on the information transmitted from the three-dimensional object fabrication apparatus 1, and determines the mixing ratio. Then, the mixing ratio is transmitted to the three-dimensional object fabrication apparatus 1 via the communication unit. The three-dimensional object fabrication apparatus 1 generates mixed powder based on the transmitted mixing ratio.

The external device may record, for example, the fabrication conditions, information on the state of the powder 50, and the like in advance.

Alternatively, the external device may perform simulation for predicting a change in the information regarding the fabrication condition and the state of the powder 50. From the transmitted information, the change of the information on the state of the recovered powder is predicted by simulation, and the optimum mixing ratio is determined.

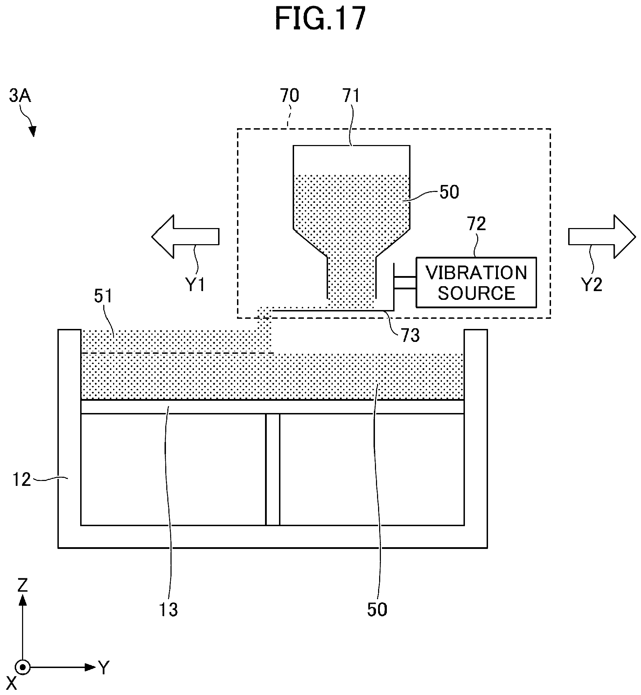

FIG. 17 is a diagram showing a fabrication unit 3A according to the first variation of the embodiment of the present invention. The fabrication unit 3A according to the first variation shown in FIG. 17 includes a powder supplier 70 instead of the supply tank 11 of the fabrication unit 3 shown in FIG. 1. The description common to FIG. 1 will be omitted as appropriate.

The powder supplier 70 supplies the powder 50 to the powder layer 51 in the fabrication tank 12. The powder supplier 70 is movable horizontally (in the Y1 and Y2 directions) and supplies the powder 50 to the fabrication tank 12 by scanning over the fabrication tank 12.

The powder supplier 70 includes a hopper 71, a vibration source 72, and a trough 73.

The hopper 71 holds the powder 50 to be supplied to the fabrication tank 12.

The trough 73 supplies the powder 50 to the fabrication tank 12. The trough 73 is a supply path through which the powder 50 held in the hopper 71 is supplied to the fabrication tank 12. The length (width) of the trough 73 in the X direction is preferably the same as the length (width) of the fabrication tank 12 in the X direction. The vibration source 72 vibrates the trough 73. The trough 73 is vibrated by the vibration source 72, and the powder 50 falls into the fabrication tank 12 from the opening of the trough 73.

The fabrication unit 3A includes the applying unit 40, the laminating unit 30, and the excess powder tank 15, similarly to the fabrication unit 3 illustrated in FIG. 1. The powder supplier 70 as a fabrication unit fabricates the powder layer 51 containing the powder 50 by supplying the powder. The applying unit 40 applies the fabrication liquid 60 to the powder layer 51 to form the fabrication layer 61. In the fabrication unit 3A, a plurality of fabrication layers 61 are stacked to shape the fabricated object.

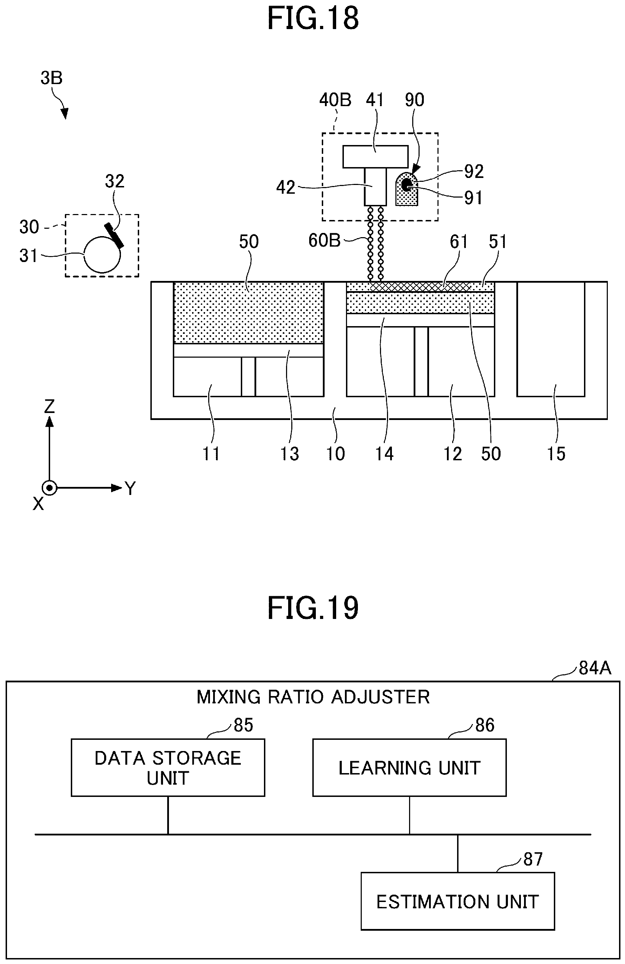

FIG. 18 is a diagram showing a fabrication unit 3B according to the second variation of the embodiment of the present invention. The fabrication unit 3B according to the second variation shown in FIG. 18 is different from the fabrication unit 3 shown in FIG. 1 in that a high speed sintering (HSS) method of applying a fabrication liquid containing a radiation energy absorber is applied.

In the fabrication unit 3B of the second variation, unlike the fabrication unit 3 of the embodiment, an applying unit 40B applies the fabrication liquid 60B containing a radiation energy absorber, and further includes a radiation energy source 90. The description of the means denoted by the same reference numerals as those in FIG. 1 will be omitted as appropriate.

The applying unit 40B applies the fabrication liquid 60B containing a radiation energy absorber to the powder layer 51 containing the powder 50.

The applying unit 40B includes the radiation energy source 90. The radiation energy source 90 is driven to the region of the powder layer 51 to which the fabrication liquid 60B containing the radiation energy absorber is applied. The radiation energy source 90 may be any source that activates the radiation energy absorber, such as light, electromagnetic radiation, and the like. The radiation energy source 90 may be provided on only one of the heads 42 or may be provided on the left and right sides. The radiation energy source 90 may be connected to the carriage 41 and driven integrally with the head 42. Alternatively, the radiation energy source 90 may be separate from the head 52 and driven separately.

The radiation energy source 90 includes a light source 91 and a reflector 92.

Examples of the light source 91 include a halogen lamp, an LED, an LD, a flash lamp, a xenon lamp, and a spherical lamp.

The reflector 92 reflects light emitted from the light source 91. For example, the reflector 92 has a substantially dome shape with one end opened and having a curved surface, and the light source 91 is disposed in the region of the opening. The curved surface of the reflector 92 condenses light so that the area of light emitted from the light source 91 to the powder layer 51 is smaller than the area of the opening of the reflector 92.

For example, when the radiation energy absorber is a near infrared dye (NIRD) or near infrared pigment (NIRP), the powder layer 51, to which the fabrication liquid 60B containing the radiation energy absorber has been applied, is irradiated with electromagnetic radiation having wavelengths from about 800 nm to about 1400 nm, for example, emitted from the radiation energy source 90. This allows the radiation energy absorber to absorb electromagnetic radiation and convert the absorbed energy to thermal energy. In addition to the radiation energy absorber, a colorant agent may be added to the powder layer 51 containing the powder 50.

FIG. 19 is a block diagram showing a mixing ratio adjuster 84A according to a variation of the embodiment of the present invention. The mixing ratio adjuster 84 shown in FIG. 8 can be replaced with the mixing ratio adjuster 84A according to the variation shown in FIG. 19.

The mixing ratio adjuster 84A may be implemented with a machine learning program. The mixing ratio adjuster 84A learns the correspondence between the fabrication data, the powder surface / powder characteristic information, and the optimal control of each unit of the three-dimensional object fabrication apparatus 1, and thus can perform the optimal fabrication control for the similar fabrication data and the similar apparatus state (the powder surface state and the powder characteristics to be used). The machine learning program includes a data storage unit 85, a learning unit 86, and an estimation unit 87.

The data storage unit 85 stores data such as the shape of the fabricated object, information about the state of the powder 50, information about the state of the fabrication tank 12, the fabrication conditions of the three-dimensional object fabrication apparatus 1, the mixing ratio, and the fabrication result (e.g., the characteristic values of the fabricated object such as accuracy, density, and strength, and the presence or absence of damage of the fabricated object or occurrence of internal defects during the process or after completion).

The learning unit 86 learns to detect, for example, a condition with a high probability of failure in fabrication from the data accumulated in the data storage unit 85. The algorithm used in the learning unit 86 is not particularly limited, and deep learning by a neural network, an unsupervised learning model, a supervised learning model, a reinforcement learning model, or the like can be applied. The teacher data input to the algorithm used in the learning unit 86 is, for example, an image photographed by the photographing unit 16, the fabrication condition of the three-dimensional object fabrication apparatus 1, and the mixing ratio.

The estimation unit 87 estimates the validity of the mixing ratio by using the learning unit 86 that has completed learning. For example, an image, a fabrication condition, a mixing ratio, and the like are input to the estimation unit 87. The estimation unit 87 outputs a predetermined numerical value. The numerical value indicates, for example, the possibility of accuracy deterioration or the possibility of occurrence of an internal defect in the fabricated object from 0 to 10.

For example, when a high numerical value is output from the estimation unit 87, there is a possibility that the fabrication quality is deteriorated.

For example, when a low numerical value is output from the estimation unit 87, it is determined that the fabrication quality satisfies the certain standard.

### <Photographing unit 16 according to Variations>

A three-dimensional (3D) scanner may be used as the photographing unit 16 included in the fabrication unit 3. A method using the 3D scanner will be described.

The 3D scanner irradiates an object with, for example, in-lasers in a crossed state, acquires light reflected from the object with a sensor, and measures distances using the principle of trilateration. Therefore, the powder surface can be observed as a three-dimensional point group more accurately. Specifically, an edge of the object can be clearly observed.

That is, in the filling-density test (S14b) described with reference to FIGS. 14A and 14B, when the 3D scanner is used as the photographing unit 16, photographed images more precise than that obtained by a digital camera, a video camera, or a CCD can be obtained, and thus, the risk of making a wrong determination can be reduced.

For example, in the case of FIGS. 14A and 14B, a "bleeding" is measured. A slight step is formed at a boundary between a seal portion where the "bleeding" occurs, for example, that is, a portion where the ink (fabrication liquid 60) is present and a portion where the ink is not present. The 3D scanner can clearly extract the step because it uses a laser and measures distances. Therefore, the reference for determining whether the bleeding is OK or Not acceptable can be accurately determined.

In this way, by using the 3D scanner as the photographing unit 16, for example, the mixing amount of the new powder can be optimized when the mixed powder is generated by mixing the new powder and the recovered powder in the powder mixer 2. Thus, the useless use of new powder is eliminated, which contributes to SDGs.

In other words, the use of the 3D scanner improves the accuracy of the determination of the boundary of the bleeding as compared with the case where a digital camera, a video camera, or a CCD is used as the photographing unit 16, and thus the use of useless new powder is eliminated.

The fluidity test (S14a) described with reference to FIGS. 13A and 13B and the particle size distribution test (S14c) described with reference to FIGS. 15A and 15B can also provide the same effect by using the 3D scanner as the photographing unit 16 as in the case of the filling density test (S14b) of FIGS. 14A and 14B. That is, the accuracy of the determination is improved.

In the fluidity test (S14a) of FIGS. 13A and 13B, an area and a shape of an unevenness P generated on the surface of the powder 50 are measured. A slight step is formed at a boundary between a portion where the unevenness P is present and a portion where the unevenness P is not present. By using the 3D scanner as the photographing unit 16, the accuracy of the determination is improved as in the case of the filling density test (S14b) in FIGS. 14A and 14B.

In the particle size distribution test (S14c) of FIGS. 15A and 15B, a size of particles 50A and 50B can be measured more accurately by utilizing the advantage that an edge can be detected clearly by using the 3D scanner as the photographing unit 16, and therefore the particle size distribution can be estimated more accurately.

Therefore, also in the fluidity test (S14a) and the particle size distribution test (S14c), when the 3D scanner is used as the photographing unit 16, it is possible to accurately determine the reference for the test result being OK or Not acceptable.

Even when the 3D scanner is used as the photographing unit 16, the processing other than the tests in step S14 may be the same as the case where the digital camera, the video camera, or the CCD is used as the photographing unit 16 in the flowchart of the mixing ratio adjustment control in FIG. 11.

The present embodiment has been described above with reference to specific examples. However, the present disclosure is not limited to these specific examples. Those skilled in the art may appropriately modify these specific examples, and such modifications are also encompassed within the scope of the present disclosure as long as they have the features of the present disclosure. The elements included in the specific examples described above, and the arrangement, conditions, shapes, and the like thereof are not limited to those illustrated, and can be appropriately changed. The elements of the specific examples described above can be combined as appropriate as long as no technical contradiction occurs.

In the above embodiment, the single three-dimensional object fabrication apparatus 1 is described as an example. However, a three-dimensional object fabrication system including a plurality of three-dimensional object fabrication apparatuses 1 may be used. In the three-dimensional object fabrication system, a plurality of three-dimensional object fabrication apparatuses 1 are connected to each other so as to be able to communicate with each other, and the plurality of three-dimensional object fabrication apparatuses 1 can operate in conjunction with each other.

A control device including the fabrication controller 81, the fabrication condition storage unit 82, the state estimation unit 83, and the mixing ratio adjuster 84 may be connected to a three-dimensional object fabrication apparatus including the powder mixer 2, the fabrication unit 3, the drying unit 4, the powder remover 5, the sintering unit 6, and the recovering unit 7, or the control device may be included in the three-dimensional object fabrication apparatus.

### <Contribution to sustainable development goals (SDGs) led by United Nations>

Each embodiment of the present invention can shape a three-dimensional fabricated object by using recovered powder, and thus can contribute to the SDGs targets 12 and 13.

In addition, when aluminum, iron, copper, or the like is contained as a metal in the powder, the powder can contribute to recycling.

The aspects of the present invention are as follows, for example.
<1> A three-dimensional object fabrication apparatus including:
   a fabrication unit that fabricates a fabricated object containing metal powder;
   a recovering unit that recovers at least a part of the powder as recovered powder;
   a powder mixer that generates mixed powder containing at least the recovered powder; and
   a controller that controls a mixing ratio of new powder of the powder and the recovered powder based on information on at least one state of the powder, the recovered powder, or the mixed powder.
<2> The three-dimensional object fabrication apparatus according to <1>,
   the fabrication unit including an applying unit that applies fabrication liquid to the powder.
<3> The three-dimensional object fabrication apparatus according to <1> or <2>,
   the recovering unit recovering at least a part of the powder used in the fabrication unit or the powder removed by a powder remover.
<4> The three-dimensional object fabrication apparatus according to any one of <1> to <3>,
   the powder mixer mixing the new powder that has not been used in the fabrication unit and the recovered powder.
<5> The three-dimensional object fabrication apparatus according to any one of <1> to <4>,
   the information on at least one state of the powder, the recovered powder, or the mixed powder including one or more of a fluidity of the powder, a filling density of the powder, and a particle distribution of the powder.
<6> The three-dimensional object fabrication apparatus according to any one of <1> to <5>,
   the controller controlling the mixing ratio further based on information on a fabrication condition of the fabrication unit.
<7> The three-dimensional object fabrication apparatus according to any one of <1> to <6> further including a state estimation unit that estimates the information on at least one state of the powder, the recovered powder, or the mixed powder,
   the controller controlling the mixing ratio based on the information estimated by the state estimation unit.
<8> The three-dimensional object fabrication apparatus according to any one of <1> to <7> further including a photographing unit that photographs a surface of the powder in the fabrication unit,
   the information on at least one state of the powder, the recovered powder, or the mixed powder being determined based on an image photographed by the photographing unit.
<9> The three-dimensional object fabrication apparatus according to any one of <1> to <8>,
   the powder mixer including a motor that stirs the mixed powder, and
   the controller determining the information on at least one state of the powder, the recovered powder, or the mixed powder based on a driving force of the motor.
<10> The three-dimensional object fabrication apparatus according to any one of <1> to <9>,
   an operation mode prioritizing cost, an operation mode prioritizing accuracy, or an operation mode prioritizing speed being selected as an operation mode, and
   the controller determining the information on at least one state of the powder, the recovered powder, or the mixed powder according to the selected operation mode.
<11> A three-dimensional object fabrication apparatus including:
   a forming unit that forms a layer containing powder;
   an applying unit that applies fabrication liquid to the layer;
   a recovering unit that recovers at least a part of the powder as recovered powder;
   a powder mixer that generates mixed powder containing at least the recovered powder; and
   a controller that controls a mixing ratio of new powder of the powder and the recovered powder based on information on a fabrication condition of the forming unit.
<12> The three-dimensional object fabrication apparatus according to <11>,
   the powder containing metal.
<13> The three-dimensional object fabrication apparatus according to <11> or <12>,
   the forming unit including a flattening unit that flattens a surface of the powder by being scanned along the surface of the powder while rotating to form a powder layer, and
   the fabrication condition including any of a volume of a fabricated object, a scanning rate of the flattening unit, a speed of rotation of the flattening unit, or a laminate thickness of the powder layer.
<14> The three-dimensional object fabrication apparatus according to any one of <11> to <13>,
   the controller controlling the mixing ratio of the mixed powder further based on information on at least one state of the powder, the recovered powder, or the mixed powder.
<15> A three-dimensional object fabrication method including:
   fabrication a fabricated object containing metal powder;
   recovering at least a part of the powder as recovered powder;
   generating mixed powder containing at least the recovered powder; and
   controlling a mixing ratio of new powder of the powder and the recovered powder based on information on at least one state of the powder, the recovered powder, or the mixed powder.
<16> The three-dimensional object fabrication apparatus according to any one of <1> to <14> further including a sintering unit that sinters the fabricated object.
<17> A control device that controls an operation of a three-dimensional object fabrication apparatus including a fabrication unit that fabricates a fabricated object containing metal powder; a recovering unit that recovers at least a part of the powder as recovered powder; and a powder mixer that generates mixed powder containing at least the recovered powder, the control device being configured to
   control a mixing ratio of new powder of the powder and the recovered powder based on information on at least one state of the powder, the recovered powder, or the mixed powder.
<18> A recovery device that recovers at least a part of powder used in a three-dimensional object fabrication apparatus that fabricates a fabricated object containing metal powder, as recovered powder, the recovery device including
   a controller that controls a mixing ratio of new powder of the powder and the recovered powder based on information on at least one state of the powder, the recovered powder, or the mixed powder.

This application is based on Japanese Patent Applications No. 2023-043479, filed March 17, 2023 and No. 2023-122685, filed July 27, 2023, the content of which is incorporated herein by reference.

### Reference signs list

- 1: Three-dimensional object fabrication apparatus
- 2: Powder mixer
- 3: Fabrication unit
- 6: Sintering unit
- 7: Recovering unit
- 8: Controller (Control device)
- 16: Photographing unit
- 22: Motor
- 31: Flattening unit
- 50: Powder (Mixed powder)
- 51: Powder layer
- 82: Fabrication condition storage unit (Recording unit)
- 83: State estimation unit

### [Related Art Document]

### [Patent Document]

Patent Document 1: Japanese unexamined patent application publication No. 2021-025062

## Claims

1. A three-dimensional object fabrication apparatus comprising:
a fabrication unit that fabricates a fabricated object containing metal powder;
a recovering unit that recovers at least a part of the powder as recovered powder;
a powder mixer that generates mixed powder containing at least the recovered powder; and
a controller that controls a mixing ratio of new powder of the powder and the recovered powder based on information on at least one state of the powder, the recovered powder, or the mixed powder.

2. The three-dimensional object fabrication apparatus according to claim 1, wherein
the fabrication unit includes an applying unit that applies fabrication liquid to the powder.

3. The three-dimensional object fabrication apparatus according to claim 1, wherein
the recovering unit recovers at least a part of the powder used in the fabrication unit or the powder removed by a powder remover.

4. The three-dimensional object fabrication apparatus according to claim 1, wherein
the powder mixer mixes the new powder that has not been used in the fabrication unit and the recovered powder.

5. The three-dimensional object fabrication apparatus according to claim 1, wherein
the information on at least one state of the powder, the recovered powder, or the mixed powder includes one or more of a fluidity of the powder, a filling density of the powder, and a particle distribution of the powder.

6. The three-dimensional object fabrication apparatus according to claim 1, wherein
the controller controls the mixing ratio further based on information on a fabrication condition of the fabrication unit.

7. The three-dimensional object fabrication apparatus according to claim 1 further comprising:
a state estimation unit that estimates the information on at least one state of the powder, the recovered powder, or the mixed powder, wherein
the controller controls the mixing ratio based on the information estimated by the state estimation unit.

8. The three-dimensional object fabrication apparatus according to claim 1 further comprising:
a photographing unit that photographs a surface of the powder in the fabrication unit,
wherein
the information on at least one state of the powder, the recovered powder, or the mixed powder is determined based on an image photographed by the photographing unit.

9. The three-dimensional object fabrication apparatus according to claim 1, wherein
the powder mixer includes a motor that stirs the mixed powder, and
the controller determines the information on at least one state of the powder, the recovered powder, or the mixed powder based on a driving force of the motor.

10. The three-dimensional object fabrication apparatus according to claim 1, wherein
an operation mode prioritizing cost, an operation mode prioritizing accuracy, or an operation mode prioritizing speed is selected as an operation mode, and
the controller determines the information on at least one state of the powder, the recovered powder, or the mixed powder according to the selected operation mode.

11. A three-dimensional object fabrication apparatus comprising:
a forming unit that forms a layer containing powder;
an applying unit that applies fabrication liquid to the layer;
a recovering unit that recovers at least a part of the powder as recovered powder;
a powder mixer that generates mixed powder containing at least the recovered powder; and
a controller that controls a mixing ratio of new powder of the powder and the recovered powder based on information on a fabrication condition of the forming unit.

12. The three-dimensional object fabrication apparatus according to claim 11,
the powder contains metal.

13. The three-dimensional object fabrication apparatus according to claim 11, wherein
the forming unit includes a flattening unit that flattens a surface of the powder by being scanned along the surface of the powder while rotating to form a powder layer, and
the fabrication condition includes any of a volume of a fabricated object, a scanning rate of the flattening unit, a speed of rotation of the flattening unit, or a laminate thickness of the powder layer.

14. A control device that controls an operation of a three-dimensional object fabrication apparatus including a fabrication unit that fabricates a fabricated object containing metal powder; a recovering unit that recovers at least a part of the powder as recovered powder; and a powder mixer that generates mixed powder containing at least the recovered powder, the control device being configured to
control a mixing ratio of new powder of the powder and the recovered powder based on information on at least one state of the powder, the recovered powder, or the mixed powder.

15. A recovery device that recovers at least a part of powder used in a three-dimensional object fabrication apparatus that fabricates a fabricated object containing metal powder, as recovered powder, the recovery device comprising
a controller that controls a mixing ratio of new powder of the powder and the recovered powder based on information on at least one state of the powder, the recovered powder, or the mixed powder.
